# EUROPEAN PATENT SPECIFICATION

(11) **EP 3 448 961 B1**
(45) Date of publication and mention of the grant of the patent: **15.10.2025**
(21) Application number: 17721449.1
(22) Date of filing: 28.04.2017
(51) Int. Cl.: C10G 45/04, B01J 27/14, B01J 27/185, B01J 29/00, C10G 3/00

(54) **COMPOSITION AND USE IN HYDROCARBON PRODUCTION PROCESS**
ZUSAMMENSETZUNG UND VERWENDUNG IN VERFAHREN ZUR HERSTELLUNG VON KOHLENWASSERSTOFF
COMPOSITION ET UTILISATION DANS DES PROCÉDÉS DE PRODUCTION D'HYDROCARBURE

(30) Priority: 29.04.2016 GB 201607540
(43) Date of publication of application: 06.03.2019
(73) Proprietor: Oxford University Innovation Limited, Oxford OX1 2JD (GB)
(72) Inventor: O'HARE, Dermot, Oxford OX1 3TA (GB); BUFFET, Jean-Charles, Oxford OX1 3TA (GB); TSANG, Shik Chi Edman, Oxford OX1 3TA (GB); DUAN, Haohong, Oxford OX1 3TA (GB); ISSARIYAKUL, Titipong, Sapansung Bangkok 10250 (TH); TREERATDILOKKUL, Apirak, Muang Nonthaburi 11000 (TH); LERTRATTANAJINDA, Rungthip, Bangkhuntien Bangkok 10150 (TH); LERKMANGKORN, Wuttinan, Banna Nakhon Nayok 26110 (TH); VORAKUNPINIJ, Adisak, Muang Nonthaburi 11000 (TH); PONGTANYA, Pongsuda, Bangkok Noi Bangkok 10700 (TH)
(74) Representative: HGF
(86) International application number: PCT/GB2017/051197
(87) International publication number: WO 2017/187189

(56) References cited:
- EP-A2- 2 415 520
- WO-A1-01/23501
- US-A1- 2011 046 419
- V ZUZANIUK ET AL: "Synthesis and characterization of silica-supported transition-metal phosphides as HDN catalysts", JOURNAL OF CATALYSIS., vol. 219, no. 1, 1 October 2003 (2003-10-01), US, pages 85 - 96, XP055391545, ISSN: 0021-9517, DOI: 10.1016/S0021-9517(03)00149-0
- DATABASE WPI Week 201529, Derwent World Patents Index; AN 2015-15970M, XP002772215
- DATABASE WPI Week 201440, Derwent World Patents Index; AN 2014-L08429, XP002772216

## Description

### FIELD OF THE INVENTION

The invention relates to a composition suitable for use as a hydrodeoxygenation catalyst.

### BACKGROUND TO THE INVENTION

Environmental concerns and the increasing cost of fossil fuel have stimulated worldwide interest in alternatives to petroleum-based fuels, chemicals, and other products. Biomass, i.e. material derived from living or recently living biological material, is one category of renewable alternatives to such fuels and chemicals. Fuels from biomass, including from vegetable, animal, or algae sources, will become increasingly important. A key challenge for promoting and sustaining the use of biomass in industry is the need to develop efficient technologies for converting biomass into useful products, e.g. hydrocarbon fuels. In particular, efficient technologies are needed for upgrading bio-oil into hydrocarbons by reducing the oxygen and water contents of the bio-oil.

Cost-effective cleavage of carbon-oxygen bonds plays an important role and remains a great challenge in the production of hydrocarbon fuels and fine chemicals from biomass. With the increasing demand for fuel and commodity chemicals and our dependence on non-renewable resources like petroleum, there is a need to develop increasingly effecient strategies to produce hydrocarbons and commodity chemicals from renewable and terrestrially abundant sources such as oxygen-rich biopolymers (e.g. biomass) and biomass-derived bio-oils.

However, many current heterogeneous hydrodeoxygenation (HDO) catalysts are susceptible to deactivation in the presence of bio-oil substrates, ultimately affording complicated mixtures of products at low conversion. Such conventional catalysts include NiMo and CoMo sulphites, which are problematic due to sulfur contamination and coke accumulation (Baker, E. G.; Elliott, D. C., Method of upgrading oils containing hydroxyaromatic hydrocarbon compounds to highly aromatic gasoline; Etienne Laurent, B. D. journal of Catalysis 1994, 146, 281). Recently, metal phosphides have been reported to be promising alternative due to their activity and stability advantages (Zhao, H. Y.; Li, D.; Bui, P.; Oyama, S. T. Applied Catalysis A: General 2011, 391, 305). Transition metal phosphide catalysts are also known from WO01/23501 A1. However, there is still room for performance improvement in metal-phosphide-catalyzed HDO.

There is therefore a need for increasingly efficient HDO catalyst systems for the production of hydrocarbons from biomass in the presence of hydrogen. Catalysts are also needed which are much less susceptible to poisoning and deactivation when in contact with the biomass substrate. There is also a need for better catalysts for producing hydrocarbon fuels, for example diesel, having an ultra-low organosulfur and/or organonitrogen content. There is therefore an ongoing need for efficient hydrodesulfurization (HDS) and hydrodenitrogenation (HDN) catalysts for the removal of sulfur and nitrogen respectively from sulfur- and nitrogen- containing organics.

### SUMMARY OF THE INVENTION

A heterogeneous catalyst is provided which is surprisingly active and selective for the production of hydrocarbons by hydrogenolysis of heteroatom-containing organics, including plant-derived oil. Recognising that the hydrogenolysis of such a substrate involves not only hydrogenation but also a subsequent heteroatom removal step, e.g. deoxygenation, desulfurisation or denitrogenation, the inventors postulated that due to their Lewis acidity, metal phosphide catalysts are effective in catalyzing the heteroatom removal step but not as effective in catalysing hydrogenation. The inventors have therefore combined a transition metal that is suitable for catalysing hydrogenation with both a metal phosphide and a solid catalyst support, to produce a catalyst which is unexpectedly active and selective in the production of useful hydrocarbons from heteroatom-containing organics. The catalyst has the potential to enhance the economical viability of this route to hydrocarbons.

Accordingly, the invention provides a composition, which comprises:
(a) a first metal, which is a transition metal suitable for catalysing the hydrogenation of organic compounds, wherein:
   the composition comprises nanoparticles of the first metal and the first metal is platinum or palladium, and
   the nanoparticles have a particle size of from 0.5 nm to 500 nm, and
   the first metal is in the oxidation state 0, and
   the first metal is present in an amount of from 0.01 % by weight to 3.0 % by weight, based on the total weight of the composition;
(b) a phosphide of one or more transition metals, wherein:
   the phosphide of one or more transition metals is molybdenum phosphide, and
   the phosphide of one or more transition metals is present in an amount of at least 5.0 % by weight based on the total weight of the composition; and
(c) a solid catalyst support, wherein the solid catalyst support comprises SiO₂.

The invention also provides the use of the composition of the invention as a hydrodeoxygenation catalyst.

### BRIEF DESCRIPTION OF THE FIGURES

Fig. 1 shows X-ray diffraction (XRD) patterns of synthesised MoP supported on SiO₂ with (bottom) lower loading amount and (up) higher loading amount.
Fig. 2 is a transmission electron microscopy (TEM) image of as-prepared MoP(3.6 %)/SiO₂.
Fig. 3 shows XRD patterns of synthesised MoP supported on ZSM-5 with (bottom) lower loading amount and (up) higher loading amount.
Fig. 4 is a TEM image of as-prepared MoP(10 %)/ZSM-5.
Fig. 5 is a high resolution transmission electron microscopy (HRTEM) image of as-prepared MoP(10 %)/ZSM-5, indicating the crystalline nature of MoP.
Fig. 6 is a TEM image of as-prepared Pt(0.9 %)-MoP(10 %)/SiO₂.
Fig. 7 is a GC-MS pattern for the bio-oil organic phase.
Fig. 8 shows the component distribution of bio-oil (organic phase) by summarising the data from Figure 7.
Fig. 9 is a scheme for the HDO reaction and possible product categories.
Fig. 10 is a histogram comparing of the HDO of 2,6-dimethoxyphenol between Pt (0.9%)-MoP(10%)/SiO₂ and other typical catalysts, demonstrating the Pt (0.9%)-MoP(10%)/SiO₂ is characterised by high HDO activity and weak transalkylation affinity. The numbers in brackets represent the loading amount.
Fig. 11 is a histogram providing a representative comparison between optimised Pd(0.78 %)-MoP(10 %)/SiO₂ catalyst at various reaction times (49#: 12 h, 50#: 6 h and 52#: 0.5 h).
Fig. 12 is a histogram providing a representative comparison between optimized Pd(0.78 %)-MoP(10 %)/SiO₂ catalyst at various number of cycles 52#: fresh, 54#: 1 cycle for 0.5 h reaction.
Fig. 13 is a plot of the corresponding area (y axis) in a.u. versus concentration of 2,6-dimethoxyphenol (x axis) in mg/mL, with the concentration of 2,6-dimethoxyphenol in bio-oil highlighted.
Fig. 14 is the GC-MS pattern of bio-oil (top) and corresponding catalytic product (bottom). The insets show the bio-oil in a vial (top) and its product in a vial (bottom).
Fig. 15 shows the distribution of products of the HDO of bio-oil, using Pt-MoP/SiO₂ as the catalyst analysed by GC-MS.

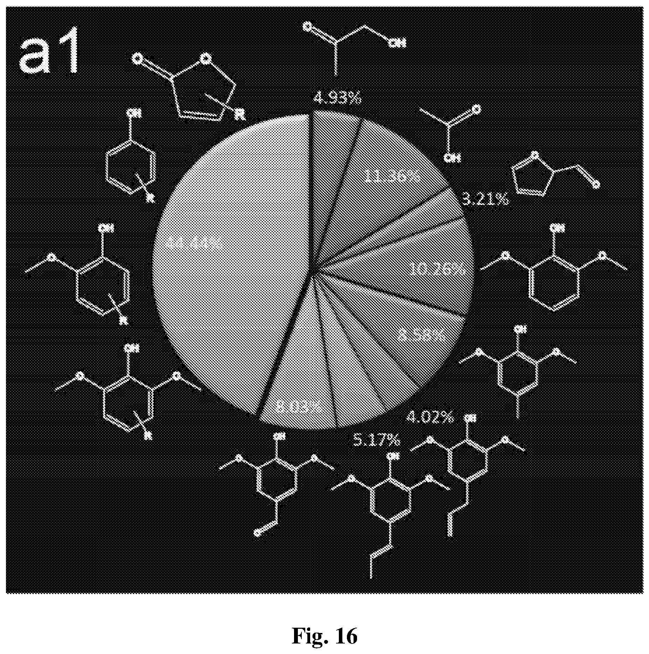

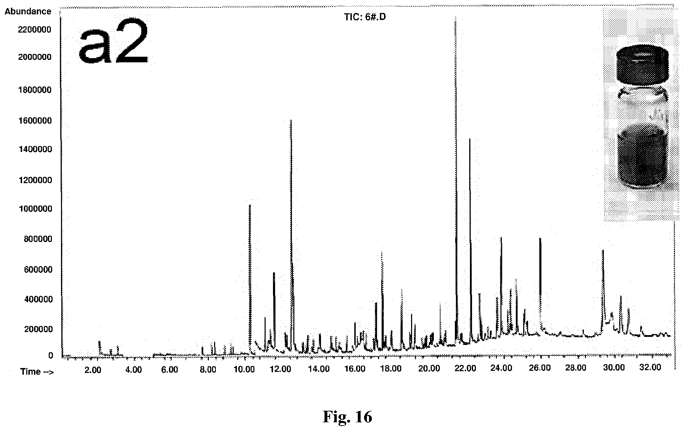

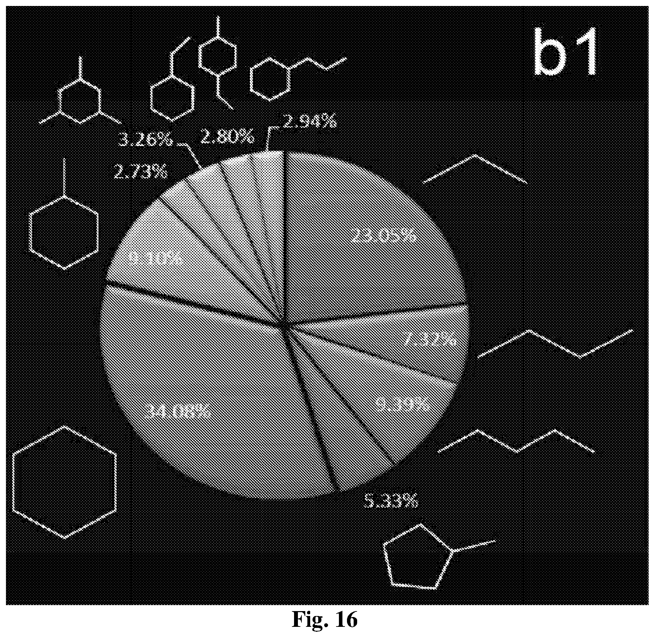

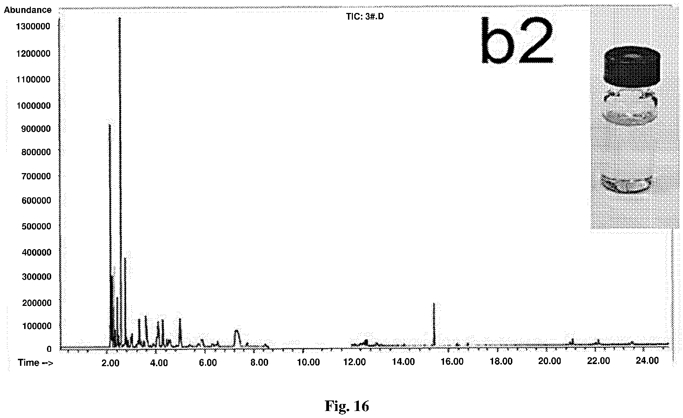

Fig. 16 shows: (a1) the composition of the bio-oil employed and (a2) the corresponding GC-MS pattern, and (b1) its product composition and (b2) corresponding GC-MS pattern after HDO reaction by using Pt(0.9 %)-MoP(10 %)/SiO₂ as the catalyst. The insets show the bio-oil in vial and its product in vial.

### DETAILED DESCRIPTION OF THE INVENTION

### Substituent Definitions

As used herein, a C₁₋₄₀ alkyl group is an unsubstituted or substituted, straight or branched chain saturated hydrocarbon radical having from 1 to 40 carbon atoms. Typically it is C₁₋₃₅ alkyl, or for instance C₁₋₃₀ alkyl, or C₁₋₂₅ alkyl, or C₁₋₂₀ alkyl. It may for instance be C₄₋₃₅ alkyl, or for instance C₇₋₃₅ alkyl, or for example C₄₋₃₀ alkyl, or C₇₋₃₀ alkyl, or for instance C₇₋₂₅ alkyl, C₇₋₂₁ alkyl, C₁₀₋₂₀ alkyl or C₁₃₋₁₈ alkyl. Often, it is C₁₋₂₀ alkyl or C₁₋₁₀ alkyl, for example methyl, ethyl, propyl, butyl, pentyl, hexyl, heptyl, octyl, nonyl or decyl, or C₁₋₆ alkyl, for example methyl, ethyl, propyl, butyl, pentyl or hexyl, or C₁₋₄ alkyl, for example methyl, ethyl, i-propyl, n-propyl, t-butyl, s-butyl or n-butyl. In one embodiment, it is a C₂₋₄₀ alkyl group or, for instance, a C₃₋₄₀ alkyl or a C₄₋₄₀ alkyl group. When a C₁₋₄₀ alkyl group is substituted it typically bears one or more substituents, for instance from one to ten, or for example from one to four (e.g. one, two, three or four) substituents. Where two or more substituents are present, these may be the same or different. The substituents may be selected from substituted or unsubstituted C₁₋₂₀ alkyl; substituted or unsubstituted C₂₋₂₀ alkenyl; substituted or unsubstituted C₂₋₂₀ alkynyl; substituted or unsubstituted aryl; substituted or unsubstituted heteroaryl; substituted or unsubstituted C₃₋₂₀ carbocyclyl; substituted or unsubstituted C₃₋₂₀ heterocyclyl; keto; formyl; ester; acyl; acyloxy; C₁₋₂₀ alkoxy; aryloxy; hydroxyl and carboxy. Typically a substituted C₁₋₂₀ alkyl group carries 1, 2 or 3 substituents, for instance 1 or 2.

A C₂₋₄₀ alkenyl group is a straight or branched group, which contains from 2 to 40 carbon atoms. One or more double bonds are present in the alkenyl group, typically from one to ten double bonds, and more typically from one to five double bonds, for instance one or two double bonds. Often, only one double bond is present. A C₂₋₄₀ alkenyl group is typically a C₂₋₃₅ alkenyl, or for instance a C₂₋₃₀ alkenyl, or a C₂₋₂₅ alkenyl, or a C₂₋₂₀ alkenyl. It may for instance be a C₄₋₃₅ alkenyl, or for instance a C₇₋₃₅ alkenyl, or for example a C₄₋₃₀ alkenyl group or a C₇₋₃₀ alkenyl group, for instance C₇₋₂₅ alkenyl, C₇₋₂₁ alkenyl, C₁₀₋₂₀ alkenyl or C₁₃₋₁₈ alkenyl. A C₂₋₂₀ alkenyl group may for instance be a C₂₋₆ alkenyl group, for example ethenyl, allyl, propenyl, butenyl, pentenyl or hexenyl. A C₂₋₄₀ alkenyl group may be unsubstituted or substituted. When a C₂₋₄₀ alkenyl group is substituted it typically bears one or more substituents, for instance from one to ten, or for example from one to four (e.g. one, two, three or four) substituents, the substituents, unless otherwise specified, being selected from those listed above for C₁₋₄₀ alkyl groups. Where two or more substituents are present, these may be the same or different.

A C₂₋₄₀ alkynyl group is a straight or branched group, which contains from 2 to 40 carbon atoms. One or more triple bonds are present in the alkynyl group, typically from one to ten triple bonds, and more typically from one to five triple bonds, for instance one or two triple bonds. Often, only one triple bond is present. One or more double bonds may or may not also be present in the alkynyl group. A C₂₋₄₀ alkynyl group is typically a C₂₋₃₅ alkynyl, or for instance a C₂₋₃₀ alkynyl, or a C₂₋₂₅ alkynyl, or a C₂₋₂₀ alkynyl. It may for instance be a C₄₋₃₅ alkynyl, or for instance a C₇₋₃₅ alkynyl, or for example a C₄₋₃₀ alkynyl group or a C₇₋₃₀ alkynyl group, for instance C₇₋₂₅ alkynyl, C₇₋₂₁ alkynyl, C₁₀₋₂₀ alkynyl or C₁₃₋₁₈ alkynyl. A C₂₋₂₀ alkynyl group may for instance be a C₂₋₆ alkynyl group, for example ethynyl, propynyl, butynyl, pentynyl or hexynyl. A C₂₋₄₀ alkynyl group may be unsubstituted or substituted. When a C₂₋₄₀ alkynyl group is substituted it typically bears one or more substituents, for instance from one to ten, or for example from one to four (e.g. one, two, three or four) substituents, the substituents, unless otherwise specified, being selected from those listed above for C₁₋₄₀ alkyl groups. Where two or more substituents are present, these may be the same or different.

A C₁₋₁₅₀ hydrocarbon is a straight-chained, branched or cyclic, saturated or unsaturated, aliphatic or aromatic hydrocarbon compound having from 1 to 150 carbon atoms. The C₁₋₁₅₀ hydrocarbon is usually a straight-chained or branched, saturated or unsaturated aliphatic hydrocarbon compound having from 1 to 150 carbon atoms. However, it may alternatively be a cyclic hydrocarbon, for instance a cyclic aliphatic hydrocarbon, which may be saturated or unsaturated, or for instance a cyclic aromatic hydrocarbon. Typically, the C₁₋₁₅₀ hydrocarbon is a C₁₀₋₁₅₀ hydrocarbon or a C₁₋₁₀₀ hydrocarbon. It may, for instance, be a C₂₀₋₁₅₀ hydrocarbon, a C₁₀₋₁₀₀ hydrocarbon or a C₂₅₋₇₀ hydrocarbon, such as for instance a C₄₀₋₇₀ hydrocarbon. Alternatively, it may, for instance, be a C₁₋₃₅ hydrocarbon, or for instance a C₁₋₃₀ hydrocarbon, or a C₁₋₂₅ hydrocarbon, or a C₁₋₂₀ hydrocarbon or C₁₋₁₀ hydrocarbon. It may for instance be a C₄₋₃₅ hydrocarbon, or for instance a C₈₋₃₅ hydrocarbon, or for example a C₄₋₃₀ hydrocarbon, or a C₈₋₃₀ hydrocarbon, or for instance a C₈₋₂₅ hydrocarbon, a C₈₋₂₀ hydrocarbon, a C₁₀₋₂₀ hydrocarbon or a C₁₄₋₂₀ hydrocarbon. A C₁₋₁₅₀ hydrocarbon may be unsubstituted or substituted, the substituents, unless otherwise specified, being selected from those listed above for C₁₋₄₀ alkyl groups. Typically, when a C₁₋₁₅₀ hydrocarbon is substituted, it is substituted by from one to thirty, for instance from one to twenty, or from one to ten, or for example from one to four (e.g. one, two, three or four) substituents. Where two or more substituents are present, these may be the same or different. One or more double or triple bonds (usually double bonds) may be present in the C₁₋₁₅₀ hydrocarbon. For instance, from one to ten double or triple bonds (usually double bonds) may be present, and more typically from one to five double or triple bonds, for instance one or two double or triple bonds (usually double bonds).

A C₁₋₄₀ alkyl, C₂₋₄₀ alkenyl or C₂₋₄₀ alkynyl group as defined herein, or a C₁₋₁₅₀ hydrocarbon, may be either uninterrupted or interrupted by one or more atoms or groups selected from: O, C(O)O, OC(O), arylene, heteroarylene, a C₃₋₁₀ carbocyclic ring and a C₃₋₁₀ heterocyclic ring. The arylene groups are typically phenylene. The phrase "optionally interrupted" as used herein thus refers to a C₁₋₄₀ alkyl, C₂₋₄₀ alkenyl or C₂₋₄₀ alkynyl group, as defined above, or a C₁₋₁₅₀ hydrocarbon, as defined above, which is uninterrupted or which is interrupted between adjacent carbon atoms by an atom or group selected from O, C(O)O, OC(O), arylene, heteroarylene, a C₃₋₁₀ carbocyclic ring and a C₃₋₁₀ heterocyclic ring. For instance, a C₁₋₄₀ alkyl group such as n-butyl may be interrupted by the heteroatom O as follows: -CH₂OCH₂CH₂CH₃, -CH₂CH₂OCH₂CH₃, or -CH₂CH₂CH₂OCH₃. Typically an interrupted group or compound, for instance an interrupted C₁₋₄₀ alkyl group or an interrupted C₁₋₁₅₀ hydrocarbon, is interrupted by from 1 to 10, more typically from 1 to 5, or for instance 1, 2 or 3 of said atoms or groups, each between a (different) pair of adjacent carbon atoms. More typically, an interrupted group, for instance an interrupted C₁₋₄₀ alkyl group, is interrupted by 1 or 2 atoms or groups, or by a single such atom or group. For instance, a C₁₋₄₀ alkyl group such as n-butyl may be interrupted by 2 heteroatoms O as follows: -CH₂OCH₂OCH₂CH₃, or by 3 heteroatoms O as follows: -CH₂OCH₂OCH₂OCH₃.

A C₃₋₁₀ carbocyclic ring is an unsubstituted or substituted closed ring of from 3 to 10 covalently linked carbon atoms, which ring is saturated or unsaturated, and is not an aromatic ring. Typically the C₃₋₁₀ carbocyclic ring is a C₅₋₁₀ carbocyclic ring, or a C₅₋₆ carbocyclic ring. The carbocyclic ring may be saturated or unsaturated. Thus, the term C₃₋₁₀ carbocyclic ring includes the sub-classes C₃₋₁₀ cycloalkyl ring, C₃₋₁₀ cycloalkyenyl ring and C₃₋₁₀ cycloalkynyl ring. When a C₃₋₁₀ carbocyclic ring is substituted it typically bears one or more substituents selected from those listed above for C₁₋₄₀ alkyl groups.

A C₃₋₁₀ heterocyclic ring is an unsubstituted or substituted closed ring of from 3 to 10 covalently linked atoms, which ring is saturated or unsaturated, wherein at least one of the ring atoms is a multivalent ring heteroatom, for example oxygen. The C₃₋₁₀ heterocyclic ring is not an aromatic ring. Typically, the C₃₋₁₀ heterocyclic ring has from 1 to 4 such heteroatoms, e.g. oxygen atoms, the remainder of the ring atoms being carbon. Typically, the C₃₋₁₀ heterocyclic ring is a C₅₋₁₀ heterocyclic ring, or a C₅₋₆ heterocyclic ring, in which from 1 to 4 of the ring atoms are ring heteroatoms, and the remainder of the ring atoms are carbon atoms. In this context, the prefixes C₃₋₁₀ and C₅₋₆ denote the number of ring atoms, or range of number of ring atoms. When a C₅₋₁₀ heterocyclic ring is substituted it typically bears one or more substituents selected from those listed above for C₁₋₄₀ alkyl groups.

A C₃₋₂₀ carbocyclyl group is an unsubstituted or substituted monovalent moiety obtained by removing a hydrogen atom from a carbocyclic ring of a carbocyclic compound, which moiety has from 3 to 20 carbon atoms (unless otherwise specified), including from 3 to 20 ring atoms. The carbocyclyl ring may be saturated or unsaturated. Thus, the term "carbocyclyl" includes the sub-classes cycloalkyl, cycloalkyenyl and cycloalkynyl. Preferably, each ring has from 5 to 7 ring atoms. Examples of groups of C₃₋₂₀ carbocyclyl groups include C₃₋₁₀ carbocyclyl, C₅₋₇ carbocyclyl and C₅₋₆ carbocyclyl. When a C₃₋₂₀ carbocyclyl group is substituted it typically bears one or more substituents (typically one, two, three or four substituents) selected from those listed above for C₁₋₄₀ alkyl groups.

A C₃₋₂₀ heterocyclyl group is an unsubstituted or substituted monovalent, monocyclic, bicyclic or tricyclic moiety obtained by removing a hydrogen atom from a ring atom of a heterocyclic compound, which moiety has from 3 to 20 ring atoms (unless otherwise specified), of which from 1 to 10 are ring heteroatoms, for example oxygen atoms. Preferably, each ring has from 3 to 7 ring atoms, of which from 1 to 4 are ring heteroatoms. When a C₃₋₂₀ heterocyclyl group is substituted it typically bears one or more substituents selected from those listed above for C₁₋₄₀ alkyl groups. Typically a substituted C₃₋₂₀ heterocyclyl group carries 1, 2 or 3 substituents, for instance 1 or 2.

An aryl group is a substituted or unsubstituted, monocyclic or bicyclic aromatic group which typically contains from 6 to 14 carbon atoms, preferably from 6 to 10 carbon atoms in the ring portion. Examples include phenyl, naphthyl, indenyl and indanyl groups. An aryl group is unsubstituted or substituted. When an aryl group as defined above is substituted it typically bears one or more substituents (for instance, one, two, three, four or five substituents) selected from those listed above for C₁₋₄₀ alkyl groups. A substituted aryl group may be fused with a cycloalkyl group or with a heterocyclyl group.

The ring atoms of an aryl group may include one or more heteroatoms, as in a heteroaryl group. Such an aryl group (a heteroaryl group) is a substituted or unsubstituted mono- or bicyclic heteroaromatic group which typically contains from 6 to 10 atoms in the ring portion including one or more heteroatoms. It is generally a 5- or 6-membered ring, or two fused rings each of which is the same or different and typically independently selected from a 5-membered ring and a 6-membered ring, containing at least one heteroatom which is typically selected from O, S and N, and more typically, is O. It may contain, for example, 1, 2 or 3 heteroatoms. When a heteroaryl group as defined above is substituted it typically bears one or more substituents (for instance, one, two, three, four or five substituents) selected from those listed above for C₁₋₄₀ alkyl groups. A substituted heteroaryl group may be fused with a cycloalkyl group or with a heterocyclyl group.

An arylene group is an unsubstituted or substituted bidentate moiety obtained by removing two hydrogen atoms, one from each of two different aromatic ring atoms of an aromatic compound, which moiety has from 5 to 14 ring atoms (unless otherwise specified). Typically, each ring has from 5 to 7 or from 5 to 6 ring atoms. An arylene group may be unsubstituted or substituted, for instance, as specified above for aryl. Typically a substituted heteroarylene group carries 1, 2 or 3 substituents, for instance 1 or 2.

In this context, the prefixes (e.g., C₅₋₂₀, C₆₋₂₀, C₅₋₁₄, C₅₋₇, C₅₋₆, etc.) denote the number of ring atoms, or range of number of ring atoms, whether carbon atoms or heteroatoms. For example, the term "C₅₋₆ arylene," as used herein, pertains to an arylene group having 5 or 6 ring atoms. Examples of groups of arylene groups include C₅₋₂₀ arylene, C₆₋₂₀ arylene, C₅₋₁₄ arylene, C₆₋₁₄ arylene, C₆₋₁₀ arylene, C₅₋₁₂ arylene, C₅₋₁₀ arylene, C₅₋₇ arylene, C₅₋₆ arylene, C₅ arylene, and C₆ arylene.

The ring atoms may be all carbon atoms, as in "carboarylene groups" (e.g., C₆₋₂₀ carboarylene, C₆₋₁₄ carboarylene or C₆₋₁₀ carboarylene).

Examples of C₆₋₂₀ arylene groups which do not have ring heteroatoms (i.e., C₆₋₂₀ carboarylene groups) include, but are not limited to, those derived from the compounds discussed above in regard to aryl groups, e.g. phenylene, and also include those derived from aryl groups which are bonded together, e.g. phenylene-phenylene (diphenylene) and phenylene-phenylene-phenylene (triphenylene).

Alternatively, the ring atoms may include one or more heteroatoms, as in "heteroarylene groups" (e.g., C₅₋₁₀ heteroarylene). A heteroarylene group may be unsubstituted or substituted, for instance, as specified above for aryl. Typically a substituted heteroarylene group carries 1, 2 or 3 substituents, for instance 1 or 2.

As used herein the term acyl represents a group of formula: -C(=O)R, wherein R is an acyl substituent, for example, a substituted or unsubstituted C₁₋₂₀ alkyl group, a substituted or unsubstituted C₃₋₂₀ heterocyclyl group, or a substituted or unsubstituted aryl group. Examples of acyl groups include, but are not limited to, -C(=O)CH₃ (acetyl), -C(=O)CH₂CH₃ (propionyl), -C(=O)C(CH₃)₃ (t-butyryl), and -C(=O)Ph (benzoyl, phenone).

As used herein the term acyloxy (or reverse ester) represents a group of formula: -OC(=O)R, wherein R is an acyloxy substituent, for example, a substituted or unsubstituted C₁₋₂₀ alkyl group, a substituted or unsubstituted C₂₋₂₀ alkenyl group, a substituted or unsubstituted C₃₋₂₀ heterocyclyl group, or a substituted or unsubstituted aryl group, typically a C₁₋₆ alkyl group. Examples of acyloxy groups include, but are not limited to, -OC(=O)CH₃ (acetoxy), -OC(=O)CH₂CH₃, -OC(=O)C(CH₃)₃, -OC(=O)Ph, and -OC(=O)CH₂Ph.

As used herein the term ester (or carboxylate, carboxylic acid ester or oxycarbonyl) represents a group of formula: -C(=O)OR, wherein R is an ester substituent, for example, a substituted or unsubstituted C₁₋₂₀ alkyl group, a substituted or unsubstituted C₂₋₂₀ alkenyl group, a substituted or unsubstituted C₃₋₂₀ heterocyclyl group, or a substituted or unsubstituted aryl group (typically a phenyl group). Examples of ester groups include, but are not limited to, -C(=O)OCH₃, -C(=O)OCH₂CH₃, -C(=O)OC(CH₃)₃, and -C(=O)OPh.

As used herein, the terms "carboxy", "carboxyl" and "carboxylic acid" each represent a group of the formula: -C(=O)OH, or -COOH. As would be understood by the skilled person, a carboxylic acid group (for instance, when employed in the present invention) can exist in protonated and deprotonated forms (for example, -C(=O)OH and - C(=O)O⁻), and in salt forms (for example, -C(=O)O⁻X⁺, wherein X⁺ is a monovalent cation).

A C₁₋₂₀ alkoxy group is a said substituted or unsubstituted C₁₋₂₀ alkyl group attached to an oxygen atom. A C₁₋₁₀ alkoxy group is a said substituted or unsubstituted C₁₋₁₀ alkyl group attached to an oxygen atom. A C₁₋₆ alkoxy group is a said substituted or unsubstituted C₁₋₆ alkyl group attached to an oxygen atom. A C₁₋₄ alkoxy group is a substituted or unsubstituted C₁₋₄ alkyl group attached to an oxygen atom. Said C₁₋₂₀, C₁₋₁₀, C₁₋₆ and C₁₋₄ alkyl groups are optionally interrupted as defined herein. Examples of C₁₋₄ alkoxy groups include, -OMe (methoxy), -OEt (ethoxy), -O(nPr) (n-propoxy), -O(iPr) (isopropoxy), -O(nBu) (n-butoxy), -O(sBu) (sec-butoxy), -O(iBu) (isobutoxy), and -O(tBu) (tert-butoxy). Further examples of C₁₋₂₀ alkoxy groups are -O(Adamantyl), -O-CH₂-Adamantyl and -O-CH₂-CH₂-Adamantyl. An aryloxy group is a substituted or unsubstituted aryl group, as defined herein, attached to an oxygen atom. An example of an aryloxy group is -OPh (phenoxy).

As used herein the term keto, or oxo, represents a group of formula: =O

### Process

The process, for producing a hydrocarbon, comprises contacting an organic compound comprising at least one heteroatom with hydrogen in the presence of the solid catalyst.

The process may be performed on a single organic compound comprising at least one heteroatom, which organic compound may be as further defined hereinbelow. Alternatively, it may be performed on a plurality of organic compounds comprising at least one heteroatom, each of which may be as defined further hereinbelow. Usually, it is performed on a plurality of such organic compounds, e.g. a complex mixture of such hydrocarbons.

Thus, the process may comprise contacting a composition with hydrogen in the presence of the solid catalyst, which composition comprises at least one organic compound comprising at least one heteroatom. Often, the composition comprises two or more different organic compounds, each of which comprises at least one heteroatom. Each of said organic compounds which comprises at least one heteroatom may be as further defined below.

The heteroatom in the organic compound (or compounds) is usually O, N or S. More typically, however, it is O. The organic compound may of course comprise more than one heteroatom. When the organic compound comprises a plurality of heteroatoms, the heteroatoms are usually independently selected from O, N and S. Often, however, the heteroatoms are all O.

In one process, the organic compound comprises an oxygen atom and the process of the invention is an HDO process. The organic compound may comprise a plurality of oxygen atoms.

In another process, the organic compound comprises a sulfur atom and the process of the invention is an HDS process. The organic compound may comprise a plurality of sulfur atoms.

In yet another process, the organic compound comprises a nitrogen atom and the process of the invention is an HDN process. The organic compound may comprise a plurality of nitrogen atoms.

The organic compound employed in the process may however comprise a plurality of different heteroatoms selected from O, N and S, and the process may involve more than one of HDO, HDN and HDS to convert the organic compound into a hydrocarbon.

The organic compound may for instance comprise at least one oxygen atom and at least one nitrogen atom (e.g. it may be a protein, peptide or amino acid) and the process may involve both HDO and HDN, so that the catalytic process removes both the oxygen and nitrogen atoms from the organic compound to convert the compound into a hydrocarbon. Alternatively, the organic compound may comprise at least one oxygen atom and at least one sulfur atom, and the process of the invention may involve both HDO and HDS, to remove the O and S atoms from the compound and thereby convert it into a hydrocarbon. Alternatively, the organic compound may comprise at least one oxygen atom, at least one nitrogen atom, and at least one sulfur atom (e.g. it may be a protein, peptide or amino acid comprising a thiol group or a disulfide bridge) and the process may involve HDO, HDS and HDN, so that the catalytic process removes the oxygen, sulfur and nitrogen atoms from the organic compound to convert the compound into a hydrocarbon.

Usually, the organic compound comprises at least one oxygen atom, and the process involves HDO (i.e. it is an HDO process). Often, the process is performed on a mixture comprising two or more different organic compounds, each of which compounds comprises at least one oxygen atom.

Accordingly, the process typically comprises contacting a composition with hydrogen in the presence of the solid catalyst, which composition comprises at least one organic compound comprising at least one oxygen atom. Often, the composition comprises two or more different organic compounds, each of which comprises at least one oxygen atom. Thus, the process may comprises contacting a composition comprising two or more different organic compounds, each of which comprises at least one oxygen atom, with hydrogen in the presence of the solid catalyst.

The organic compound which comprises at least one oxygen atom, or one or more of the organic compounds which comprise at least one oxygen atom, may additionally comprise at least one nitrogen atom and/or at least one sulfur atom. Often, however, the organic compound or compounds which comprise at least one oxygen atom do not comprise any nitrogen or sulfur atoms. Typically, oxygen is the only heteroatom in the organic compound or compounds. Thus, often, the only atoms other than oxygen that are present in the organic compound or compounds are carbon and hydrogen atoms.

A wide range of organic compounds comprising at least one oxygen atom can be converted into hydrocarbons by the process. These include, but are by no means limited to:
esters, including esters of fatty acids, such as for instance triglycerides and alkyl esters (e.g. C₁₋₄₀ alkyl esters, but more typically C₁₋₆ alkyl esters) of fatty acids;
carboxylic acids, including fatty acids;
carbohydrates, including polysaccharides, for instance lignocellulose, cellulose, hemicellulose and starch, and disaccharides and monosaccharides;
alcohols, including monohydric alcohols (e.g. phenols and aliphatic monohydric alcohols), polyhydric alcohols and sugar alcohols;
aldehydes and ketones, including polyketones;
oxygen-containing heteroaryl compounds, for instance furans and furanones;
ethers, including polyethers; and
proteins, peptides and amino acids.

Of course, in addition to the at least one oxygen atom, the organic compound generally comprises at least one aliphatic hydrocarbon group (for instance a C₁₋₄₀ alkyl, C₂₋₄₀ alkenyl or C₂₋₄₀ alkynyl group as defined herein, which may be unsubstituted or substituted and is optionally interrupted, as defined herein, or a C₃₋₂₀ carbocyclyl group or a C₃₋₂₀ heterocyclyl group) or at least one aromatic hydrocarbon group (for instance an aryl or heteroaryl group as defined herein), or both at least one aliphatic hydrocarbon group and at least one aromatic hydrocarbon group. The oxygen atom may be present within a functional group within the compound, for instance within a hydroxyl (OH) or a carbonyl (C=O) group, e.g. within an alcohol, carboxyl, ester, keto or aldehyde group, or for instance within an ether moiety. Alternatively, the oxygen atom may be present as a ring heteroatom in an aromatic (heteroaryl) group or in a heterocyclic aliphatic ring.

The or each organic compound comprising at least one oxygen atom may be a C₁₋₁₅₀ hydrocarbon as defined herein, which is unsubstituted or substituted as defined herein, and uninterrupted or interrupted by one or more atoms or groups selected from O, C(O)O, OC(O), arylene, heteroarylene, a C₃₋₁₀ carbocyclic ring and a C₃₋₁₀ heterocyclic ring, as defined herein, provided that it comprises at least one oxygen atom.

Typically, the or each organic compound comprising at least one oxygen atom is a C₂₋₁₅₀ hydrocarbon as defined herein, for instance a C₂₋₁₀₀ hydrocarbon or a C₂₋₅₀ hydrocarbon as defined herein, or for instance a C₂₋₃₀ hydrocarbon, as defined herein, or a C₂₋₂₀ hydrocarbon, as defined herein, for instance a C₂₋₁₀ hydrocarbon, as defined herein, which is unsubstituted or substituted as defined above, and uninterrupted or interrupted as defined above, provided that it comprises at least one oxygen atom. The or each organic compound comprising at least one oxygen atom may for instance be a C₃₋₁₅₀ hydrocarbon as defined herein, for instance a C₃₋₁₀₀ hydrocarbon or a C₄₋₅₀ hydrocarbon as defined herein, or for instance a C₄₋₃₀ hydrocarbon, as defined herein, or a C₃₋₂₀ hydrocarbon, as defined herein, for instance a C₄₋₂₀ hydrocarbon, as defined herein, or a C₅₋₂₀ hydrocarbon, as defined herein, or a C₆₋₂₀ hydrocarbon, as defined herein, or a C₃₋₁₀ hydrocarbon, as defined herein, which hydrocarbon is unsubstituted or substituted as defined above, and uninterrupted or interrupted as defined above, provided that it comprises at least one oxygen atom. In yet another example, the or each organic compound comprising at least one oxygen atom is a C₁₀₋₁₅₀ hydrocarbon as defined herein, for instance a C₁₀₋₁₀₀ hydrocarbon or a C₂₅₋₇₀ hydrocarbon as defined herein, or for instance a C₄₀₋₇₀ hydrocarbon, as defined herein, which is unsubstituted or substituted as defined above, and uninterrupted or interrupted as defined above, provided that it comprises at least one oxygen atom.

The at least one oxygen atom may be present in the C₁₋₁₅₀ hydrocarbon compound, or for instance the C₂₋₁₅₀ hydrocarbon compound, as the case may be, by virtue of the compound being interrupted by one or more O, C(O)O, OC(O), heteroarylene or C₃₋₁₀ heterocyclic ring groups, provided that said heteroarylene and said C₃₋₁₀ heterocyclic ring each comprise at least one ring heteroatom which is oxygen. Additionally or alternatively, the at least one oxygen atom may be present by virtue of the C₁₋₁₅₀ hydrocarbon compound being substituted by one or more oxygen-containing groups, for instance by one or more groups selected from keto; formyl; ester; acyl; acyloxy; C₁₋₂₀ alkoxy; aryloxy; hydroxyl; carboxy; heteroaryl and C₃₋₂₀ heterocyclyl, provided that said heteroaryl and C₃₋₂₀ heterocyclyl each comprise at least one ring heteroatom which is oxygen; or for instance by virtue of the C₁₋₁₅₀ hydrocarbon compound being substituted by one or more groups selected from C₁₋₂₀ alkyl, C₂₋₂₀ alkenyl, C₂₋₂₀ alkynyl, aryl and C₃₋₂₀ carbocyclyl which are in turn substituted by one or more groups selected from: keto, formyl, ester, acyl, acyloxy, C₁₋₂₀ alkoxy, aryloxy, hydroxyl, carboxy, heteroaryl and C₃₋₂₀ heterocyclyl provided that said heteroaryl and C₃₋₂₀ heterocyclyl comprise at least one ring heteroatom which is oxygen.

As discussed above, the process typically comprises contacting a composition with hydrogen in the presence of the solid catalyst, which composition comprises at least one organic compound comprising at least one oxygen atom.

The process is especially useful for HDO of plant-derived oil. Typically, therefore, the process comprises contacting said composition with hydrogen in the presence of the solid catalyst, which composition comprises plant-derived oil.

The term "plant-derived oil", as used herein, refers to oil obtainable by the pyrolysis of plant-derived biomass.

Accordingly, the process often comprises contacting said composition with hydrogen in the presence of the solid catalyst, which composition comprises oil obtainable by the pyrolysis of plant-derived biomass.

The plant-derived biomass typically comprises cellulose, lignocellulose and lignin. The plant-derived biomass may for instance comprise pulp, wood or other plant waste.

The process is especially applicable to HDO of oil obtainable by the pyrolysis of biomass from the eucalyptus plant.

Accordingly, the plant-derived biomass may comprise biomass from the eucalyptus plant. The process often therefore comprises contacting said composition with hydrogen in the presence of the solid catalyst, which composition comprises oil obtainable by the pyrolysis of eucalyptus plant.

Typically, in the process, the organic compound which comprises at least one oxygen atom, or at least one of the organic compounds which comprises at least one oxygen atom, is an unsubstituted or substituted C₂₋₁₅₀ hydrocarbon which is uninterrupted or interrupted by one or more atoms or groups selected from O, C(O)O, OC(O), arylene, heteroarylene, a C₃₋₁₀ carbocyclic ring and a C₃₋₁₀ heterocyclic ring, provided that the C₂₋₁₅₀ hydrocarbon is:
(i) interrupted by one or more O, C(O)O, OC(O), heteroarylene or C₃₋₁₀ heterocyclic ring groups, provided that said heteroarylene and said C₃₋₁₀ heterocyclic ring each comprise at least one ring heteroatom which is oxygen; and/or
(ii) substituted by one or more groups selected from: keto; formyl; ester; acyl; acyloxy; C₁₋₂₀ alkoxy; aryloxy; hydroxyl; carboxy; heteroaryl and C₃₋₂₀ heterocyclyl, provided that said heteroaryl and said C₃₋₂₀ heterocyclyl each comprise at least one ring heteroatom which is oxygen; or substituted by one or more groups selected from C₁₋₂₀ alkyl, C₂₋₂₀ alkenyl, C₂₋₂₀ alkynyl, aryl and C₃₋₂₀ carbocyclyl which are in turn substituted by one or more groups selected from: keto, formyl, ester, acyl, acyloxy, C₁₋₂₀ alkoxy, aryloxy, hydroxyl, carboxy, heteroaryl and C₃₋₂₀ heterocyclyl provided that said heteroaryl and said C₃₋₂₀ heterocyclyl each comprise at least one ring heteroatom which is oxygen.

More typically, in the process, the organic compound which comprises at least one oxygen atom, or at least one of the organic compounds which comprises at least one oxygen atom, is an unsubstituted or substituted C₂₋₅₀ hydrocarbon which is uninterrupted or interrupted by one or more atoms or groups selected from O, C(O)O, OC(O), arylene, heteroarylene, a C₃₋₁₀ carbocyclic ring and a C₃₋₁₀ heterocyclic ring, provided that the C₂₋₅₀ hydrocarbon is:
(i) interrupted by one or more O, C(O)O, OC(O), heteroarylene or C₃₋₁₀ heterocyclic ring groups, provided that said heteroarylene and said C₃₋₁₀ heterocyclic ring each comprise at least one ring heteroatom which is oxygen; and/or
(ii) substituted by one or more groups selected from: keto; formyl; ester; acyl; acyloxy; C₁₋₂₀ alkoxy; aryloxy; hydroxyl; carboxy; heteroaryl and C₃₋₂₀ heterocyclyl, provided that said heteroaryl and said C₃₋₂₀ heterocyclyl each comprise at least one ring heteroatom which is oxygen; or substituted by one or more groups selected from C₁₋₂₀ alkyl, C₂₋₂₀ alkenyl, C₂₋₂₀ alkynyl, aryl and C₃₋₂₀ carbocyclyl which are in turn substituted by one or more groups selected from: keto, formyl, ester, acyl, acyloxy, C₁₋₂₀ alkoxy, aryloxy, hydroxyl, carboxy, heteroaryl and C₃₋₂₀ heterocyclyl provided that said heteroaryl and said C₃₋₂₀ heterocyclyl each comprise at least one ring heteroatom which is oxygen.

The organic compound which comprises at least one oxygen atom, or at least one of the organic compounds which comprises at least one oxygen atom, may for instance be an unsubstituted or substituted C₂₋₃₀ hydrocarbon which is uninterrupted or interrupted by one or more atoms or groups selected from O, C(O)O, OC(O), arylene, heteroarylene, a C₃₋₁₀ carbocyclic ring and a C₃₋₁₀ heterocyclic ring, provided that the C₂₋₃₀ hydrocarbon is:
(i) interrupted by one or more O, C(O)O, OC(O), heteroarylene or C₃₋₁₀ heterocyclic ring groups, provided that said heteroarylene and said C₃₋₁₀ heterocyclic ring each comprise at least one ring heteroatom which is oxygen; and/or
(ii) substituted by one or more groups selected from: keto; formyl; ester; acyl; acyloxy; C₁₋₂₀ alkoxy; aryloxy; hydroxyl; carboxy; heteroaryl and C₃₋₂₀ heterocyclyl, provided that said heteroaryl and said C₃₋₂₀ heterocyclyl each comprise at least one ring heteroatom which is oxygen; or substituted by one or more groups selected from C₁₋₂₀ alkyl, C₂₋₂₀ alkenyl, C₂₋₂₀ alkynyl, aryl and C₃₋₂₀ carbocyclyl which are in turn substituted by one or more groups selected from: keto, formyl, ester, acyl, acyloxy, C₁₋₂₀ alkoxy, aryloxy, hydroxyl, carboxy, heteroaryl and C₃₋₂₀ heterocyclyl provided that said heteroaryl and said C₃₋₂₀ heterocyclyl each comprise at least one ring heteroatom which is oxygen.

The organic compound which comprises at least one oxygen atom, or at least one of the organic compounds which comprises at least one oxygen atom, may for instance be a phenol of formula (A): 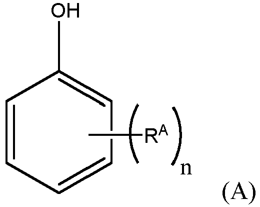 wherein
n is an integer of from 0 to 5; and
each R^{A} is independently selected from C₁₋₁₀ alkoxy, hydroxyl, C₁₋₁₀ alkyl, C₂₋₁₀ alkenyl, formyl and acyl.

Typically, in the phenol of formula (A), n is 0, 1, 2 or 3. Often, n is 1 2 or 3.

Usually, each R^{A} is independently selected from C₁₋₄ alkoxy, C₁₋₄ alkyl, C₂₋₄ alkenyl and formyl. For instance each R^{A} may be selected from methoxy, ethoxy, formyl, acetyl and C₂₋₃ alkenyl.

The phenol of formula (A) may for instance be selected from the following compounds: 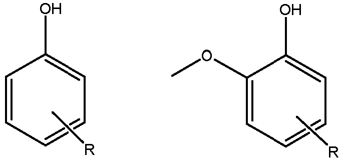 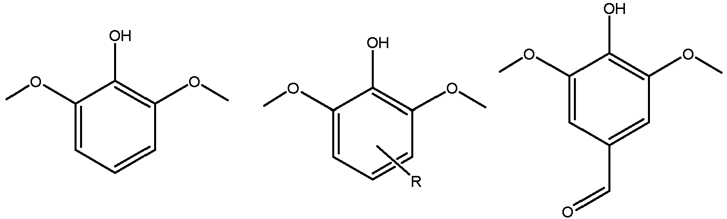 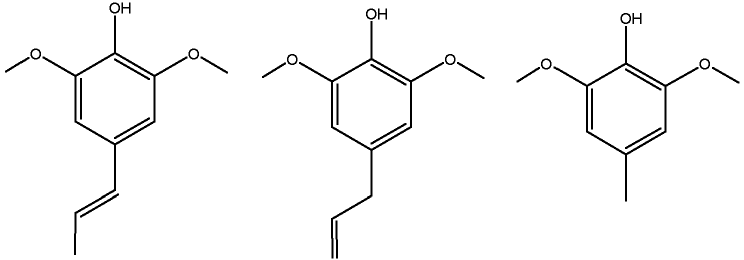 wherein R in each compound may be as defined above for R^{A}. Often, however, R is unsubstituted C₁₋₁₀ alkyl.

The organic compound which comprises at least one oxygen atom, or at least one of the organic compounds which comprises at least one oxygen atom, may for instance be a furan of formula (B): 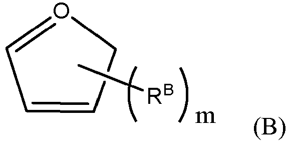 wherein
m is an integer of from 0 to 4; and
each R^{B} is independently selected from formyl, acyl, C₁₋₁₀ alkyl, C₂₋₁₀ alkenyl, C₁₋₁₀ alkoxy and hydroxyl.

Often, m is 0, 1 or 2. More typically, m is 0 or 1, for instance 1.

Typically, each R^{B} is independently selected from formyl, acyl, C₁₋₄ alkyl, C₂₋₄ alkenyl and C₁₋₄ alkoxy. Each R^{B} may for instance be independently selected from formyl, acetyl, methyl or ethyl, or, for instance, from formyl, methyl or ethyl.

The furan of formula (B) may for instance be the following compound:

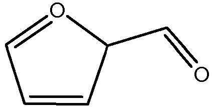

The organic compound which comprises at least one oxygen atom, or at least one of the organic compounds which comprises at least one oxygen atom, may for instance be a furanone of formula (C): 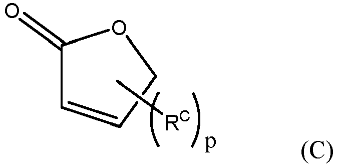 wherein
p is an integer of from 0 to 3; and
each R^{C} is independently selected from formyl, acyl, C₁₋₁₀ alkyl, C₂₋₁₀ alkenyl, C₁₋₁₀ alkoxy and hydroxyl.

Often, p is 0, 1 or 2. More typically, p is 0 or 1, for instance 1.

Typically, each R^{C} is independently selected from formyl, acyl, C₁₋₄ alkyl, C₂₋₄ alkenyl and C₁₋₄ alkoxy. Each R^{C} may for instance be independently selected from formyl, acetyl, methyl, ethyl or propyl, or, for instance, from methyl or ethyl.

The furanone of formula (C) may for instance be the following compound: 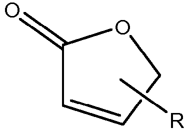 wherein R is as defined above for R^{C}. Often, however, R is unsubstituted C₁₋₁₀ alkyl.

The organic compound which comprises at least one oxygen atom, or at least one of the organic compounds which comprises at least one oxygen atom, may for instance be a carboxylic acid of formula (D): 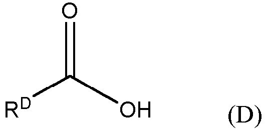 wherein R^{D} is H, C₁₋₁₀ alkyl or C₂₋₁₀ alkenyl, which C₁₋₁₀ alkyl and C₂₋₁₀ alkenyl are unsubstituted or substituted by from one to three groups selected from hydroxyl, C₁₋₁₀ alkoxy, formyl, acyl, carboxy and ester.

R^{D} may for instance be C₁₋₄ alkyl or C₂₋₄ alkenyl, which C₁₋₄ alkyl and C₂₋₄ alkenyl are unsubstituted or substituted by from one to three groups selected from hydroxyl, C₁₋₄ alkoxy, formyl, acyl, carboxy and ester. R^{D} may for instance be unsubstituted C₁₋₄ alkyl or unsubstituted C₂₋₄ alkenyl, for instance methyl, ethyl or propyl.

The carboxylic acid of formula (D) may for instance be acetic acid.

The organic compound which comprises at least one oxygen atom, or at least one of the organic compounds which comprises at least one oxygen atom, may for instance be a carbonyl compound of formula (E): 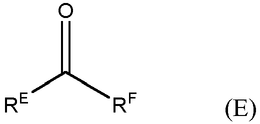 wherein
R^{E} and R^{F} are independently selected from H, C₁₋₁₀ alkyl and C₂₋₁₀ alkenyl, which C₁₋₁₀ alkyl and C₂₋₁₀ alkenyl are unsubstituted or substituted by from one to three groups selected from hydroxyl, C₁₋₁₀ alkoxy, formyl, acyl, carboxy and ester, and provided that R^{E} and R^{F} are not both H.
R^{E} and R^{F} may, for instance, be independently selected from C₁₋₄ alkyl and C₂₋₄ alkenyl, which C₁₋₄ alkyl and C₂₋₄ alkenyl are unsubstituted or substituted by from one to three groups selected from hydroxyl, C₁₋₄ alkoxy, formyl, acyl, carboxy and ester. R^{E} and R^{F} may, for instance, be independently selected from unsubstituted C₁₋₄ alkyl and unsubstituted C₂₋₄ alkenyl, for instance from methyl, ethyl and propyl.

The carbonyl compound of formula (E) may for instance be the following compound:

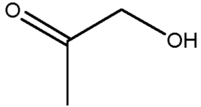

The organic compound which comprises at least one oxygen atom, or at least one of the organic compounds which comprises at least one oxygen atom, may be selected from a phenol of formula (A) as defined herein, a furan of formula (B) as defined herein, a furanone of formula (C) as defined herein, a carboxylic acid of formula (D) as defined herein, and a carbonyl compound of formula (E) as defined herein.

Thus, the organic compound which comprises at least one oxygen atom, or at least one of the organic compounds which comprises at least one oxygen atom, may for instance be selected from compounds of the following formulae: 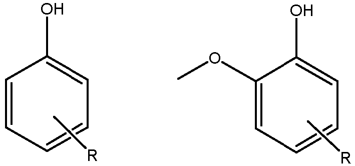 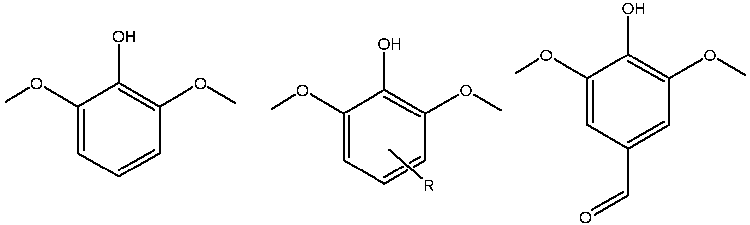 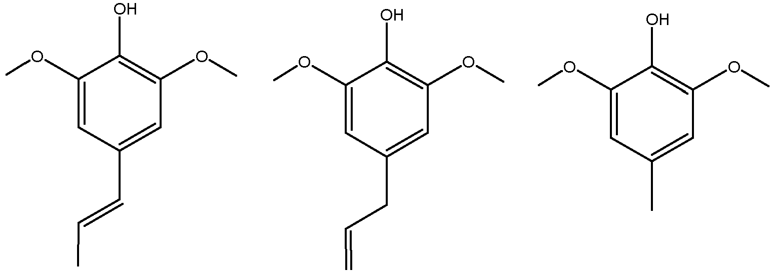 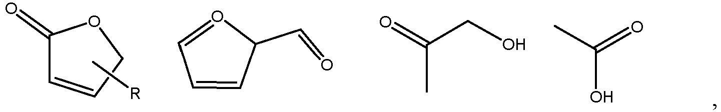 wherein R in each compound is an unsubstituted C₁₋₁₀ alkyl group.

In one example, each of the organic compounds which comprises at least one oxygen atom is selected from a phenol of formula (A) as defined herein, a furan of formula (B) as defined herein, a furanone of formula (C) as defined herein, a carboxylic acid of formula (D) as defined herein, and a carbonyl compound of formula (E) as defined herein.

When the organic compound which comprises at least one oxygen atom, or at least one of the organic compounds which comprises at least one oxygen atom, or each of the organic compounds which comprises at least one oxygen atom, is selected from a phenol of formula (A) as defined herein, a furan of formula (B) as defined herein, a furanone of formula (C) as defined herein, a carboxylic acid of formula (D) as defined herein, and a carbonyl compound of formula (E) as defined herein, the process of the invention is typically a process for producing one or more hydrocarbons selected from C₁₋₂₀ alkanes, unsubstituted cyclopentane, cyclopentane substituted with one or more C₁₋₁₀ alkyl groups, unsubstituted cyclohexane, cyclohexane substituted with one or more C₁₋₁₀ alkyl groups, unsubstituted benzene, and benzene substituted with one or more C₁₋₁₀ alkyl groups. The process may for instance be a process for producing one or more hydrocarbons selected from C₁₋₂₀ alkanes, unsubstituted cyclopentane, cyclopentane substituted with one or more C₁₋₁₀ alkyl groups, unsubstituted cyclohexane and cyclohexane substituted with one or more C₁₋₁₀ alkyl groups. The process may however be a process for producing one or more cyclic hydrocarbons selected from unsubstituted cyclopentane, cyclopentane substituted with one or more C₁₋₁₀ alkyl groups, unsubstituted cyclohexane, cyclohexane substituted with one or more C₁₋₁₀ alkyl groups, unsubstituted benzene, and benzene substituted with one or more C₁₋₁₀ alkyl groups. The process may for instance be a process for producing one or more cyclic hydrocarbons selected from unsubstituted cyclopentane, cyclopentane substituted with one or more C₁₋₁₀ alkyl groups, unsubstituted cyclohexane, and cyclohexane substituted with one or more C₁₋₁₀ alkyl groups. Often, the process is a process for producing one or more cyclic hydrocarbons selected from C₁₋₁₀ alkanes, unsubstituted cyclopentane, cyclopentane substituted with one or more C₁₋₄ alkyl groups, unsubstituted cyclohexane, cyclohexane substituted with one or more C₁₋₄ alkyl groups, unsubstituted benzene, and benzene substituted with one or more C₁₋₄ alkyl groups. The process may for instance be a process for producing one or more hydrocarbons selected from unsubstituted C₁₋₆ alkanes, unsubstituted cyclopentane, cyclopentane substituted with one or more C₁₋₄ alkyl groups, unsubstituted cyclohexane, cyclohexane substituted with one or more C₁₋₄ alkyl groups, unsubstituted benzene, and benzene substituted with one or more C₁₋₄ alkyl groups. The process may for instance be a process for producing one or more cyclic hydrocarbons selected from unsubstituted cyclopentane, cyclopentane substituted with a C₁₋₄ alkyl group, unsubstituted cyclohexane, cyclohexane substituted with a C₁₋₄ alkyl group, unsubstituted benzene, and benzene substituted with a C₁₋₄ alkyl group. The process may for instance be a process for producing one or more cyclic hydrocarbons selected from unsubstituted cyclopentane, cyclopentane substituted with a C₁₋₄ alkyl group, unsubstituted cyclohexane, and cyclohexane substituted with a C₁₋₄ alkyl group.

In the process, the or each organic compound comprising at least one oxygen atom may for instance be a C₁₋₁₅₀ hydrocarbon, or for instance a C₂₋₁₅₀ hydrocarbon, or a C₂₋₇₀ hydrocarbon, or for instance a C₂₅₋₇₀ hydrocarbon, or a C₄₀₋₇₀ hydrocarbon, which is substituted by one or more groups selected from keto; formyl; ester; acyl; acyloxy; C₁₋₂₀ alkoxy; aryloxy; hydroxyl and carboxy, or which is interrupted by one or more O, C(O)O or OC(O) groups. Often, however, the or each organic compound comprising at least one oxygen atom is a C₁₀₋₁₀₀ hydrocarbon which is substituted by one or more groups selected from keto; formyl; ester; acyl; acyloxy; C₁₋₂₀ alkoxy; aryloxy; hydroxyl and carboxy, or which is interrupted by one or more O, C(O)O or OC(O) groups. It may for instance be a C₁₀₋₁₀₀ hydrocarbon, or for instance a C₂₅₋₇₀ hydrocarbon, or a C₄₀₋₇₀ hydrocarbon, which is substituted by one or more ester, acyloxy or carboxyl groups or which is interrupted by one or more C(O)O or OC(O) groups. For instance, the or each organic compound comprising at least one oxygen atom may be a fatty acid, or an ester of a fatty acid, for instance a triglyceride.

The organic compound comprising at least one oxygen atom, or the composition comprising two or more different such organic compounds, may comprise a lipid (i.e. an oil or a fat). It may for instance comprise an animal oil or animal fat, a vegetable oil, or an algae oil (i.e. an oil produced by microalgae). The composition often comprises a mixture of oxygen-containing organic compounds selected from oxygen-containing organic compounds found in animal oils and fats, vegetable oils and/or algae oils. Thus, the composition may comprise an animal fat, a vegetable oil or an oil produced by microalgae. Additionally or alternatively, the composition comprise biodiesel.

Suitable vegetable oils include, but are not limited to, oil from soybean, rapeseed, jatropha, mahua, mustard, flax, sunflower, safflower, palm, hemp, cottonseed, field pennycress, wheatgerm, olive, corn, coconut, *Millettia pinnata* and *Pongamia pinnata.* The vegetable oil may for instance be palm oil, rapeseed oil, jatropha oil, soybean oil, Pongamia oil or canola oil. Palm oil or soybean oil may for instance be employed. The animal fat or oil may for example be tallow, which consists mainly of triglycerides whose major constituents are derived from stearic and oleic acids. Lard or duck fat may alternatively be employed. The algae oil may for instance be oil produced by any of the following types of microalgae: *Botryococcus braunii, Chlorella, Dunaliella tertiolecta, Gracilaria, Pleurochrysis carterae (also called CCMP647), Sargassum, Ankistrodesmus, Chlorella protothecoides, Cyclotella, Dunaliella tertiolecta, Hantzschia, Nannochloris, Nannochloropsis, Nitzschia, Phaeodactylum tricornutum, Scenedesmus, Stichococcus, Tetraselmis suecica, Thalassiosira pseudonana, Crypthecodinium cohnii, Neochloris oleoabundans, Schiochytrium.*

The organic compound comprising at least one oxygen atom, or the composition comprising two or more different said organic compounds, typically is, or comprises, a fatty acid or a fatty acid ester. The fatty acid ester may for instance be a triglyceride, or an alkyl ester of a fatty acid. Similarly, the composition comprising two or more different organic compounds, each comprising at least one oxygen atom, typically comprises a mixture of compounds selected from fatty acid esters and fatty acids. It may for instance comprise a mixture of more than one fatty acid ester, or a mixture of more than one fatty acid, or for instance a mixture comprising more than one fatty acid ester and more than one fatty acid. The fatty acid ester or esters may for example be selected from triglycerides, i.e. esters derived from glycerol and three fatty acids, and alkyl esters of fatty acids, for instance C₁₋₆ alkyl esters of fatty acids.

Triglycerides are the main constituents of vegetable oil (in which case the triglycerides are typically more unsaturated) animal fats (in which case the triglycerides are typically more saturated), and algae oil. Such vegetable, animal and algae oils and fats typically contain complex mixtures of triglycerides.

Thus, the organic compound comprising at least one oxygen atom is typically a triglyceride. Also, typically, the composition comprising at least one such organic compound, usually comprises at least one triglyceride, and usually comprises at least two, for instance at least three, or at least four, different triglycerides. Accordingly, the process typically comprises contacting a composition with hydrogen in the presence of the solid catalyst, which composition comprises at least one triglyceride, and more typically at least two, for instance at least three or at least four, different triglycerides. The composition may further comprise a (free) fatty acid, or for instance two or more different free fatty acids. Additionally or alternatively, the composition may further comprise a C₁₋₆ alkyl ester of a fatty acid, for instance a methyl, ethyl or propyl ester of a fatty acid. Such alkyl esters are the main constituents of biodiesel.

Alternatively, the organic compound comprising at least one oxygen atom may be a free fatty acid. Likewise, the composition comprising at least one such organic compound, usually comprises at least one fatty acid, and may for instance comprise two or more fatty acids.

In yet another example, the organic compound comprising at least one oxygen atom is a C₁₋₆ alkyl ester of a fatty acid, for instance a methyl, ethyl or propyl ester of a fatty acid. Likewise, the composition comprising at least one such organic compound, usually comprises at least one fatty acid, and may for instance comprise two or more fatty acids.

The organic compound comprising at least one oxygen atom may for instance be selected from:
a triglyceride of formula (I): 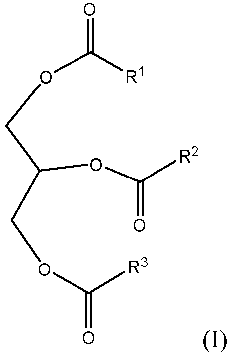 wherein
   R¹, R² and R³ are the same or different and are independently selected from unsubstituted or substituted C₁₋₄₀ alkyl (for instance unsubstituted or substituted C₄₋₃₀ alkyl), unsubstituted or substituted C₂₋₄₀ alkenyl (for instance unsubstituted or substituted C₄₋₃₀ alkenyl) and unsubstituted or substituted C₂₋₄₀ alkynyl (for instance unsubstituted or substituted C₄₋₃₀ alkynyl);
an acid of formula (II): 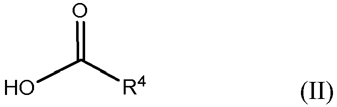 wherein
   R⁴ is unsubstituted or substituted C₁₋₄₀ alky l(for instance unsubstituted or substituted C₄₋₃₀ alkyl), unsubstituted or substituted C₂₋₄₀ alkenyl (for instance unsubstituted or substituted C₄₋₃₀ alkenyl), or unsubstituted or substituted C₂₋₄₀ alkynyl (for instance unsubstituted or substituted C₄₋₃₀ alkynyl); and
an ester of formula (III): 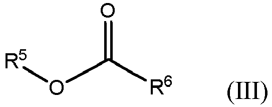 wherein
   R⁵ is unsubstituted or substituted C₁₋₁₀ alkyl; and
   R⁶ is unsubstituted or substituted C₁₋₄₀ alkyl (for instance unsubstituted or substituted C₄₋₃₀ alkyl), unsubstituted or substituted C₂₋₄₀ alkenyl (for instance unsubstituted or substituted C₄₋₃₀ alkenyl), or unsubstituted or substituted C₂₋₄₀ alkynyl (for instance unsubstituted or substituted C₄₋₃₀ alkynyl).

Usually, R¹, R² and R³ in the triglyceride of formula (I) are independently selected from unsubstituted or substituted C₄₋₃₀ alkyl and unsubstituted or substituted C₄₋₃₀ alkenyl. For instance, R¹, R² and R³ may be independently selected from unsubstituted or substituted C₇₋₂₅ alkyl and unsubstituted or substituted C₇₋₂₅ alkenyl. More typically, R¹, R² and R³ are independently selected from unsubstituted C₇₋₂₅ alkyl and unsubstituted C₇₋₂₅ alkenyl. In some embodiments,for instance, R¹, R² and R³ are independently selected from unsubstituted C₇₋₂₁ alkyl and unsubstituted C₇₋₂₁ alkenyl, or, for instance, from unsubstituted C₁₀₋₂₀ alkyl and unsubstituted C₁₀₋₂₀ alkenyl. Often, for example, R¹, R² and R³ are independently selected from unsubstituted C₁₃₋₁₈ alkyl and unsubstituted C₁₃₋₁₈ alkenyl. Specific examples of C₁₃₋₁₈ alkyl groups that may be employed include -(CH₂)₁₂CH₃, which is the alkyl residue of myristic acid, -(CH₂)₁₄CH₃, i.e. the alkyl residue of palmitic acid, and -(CH₂)₁₆CH₃, i.e. the alkyl residue of stearic acid. Specific examples of C₁₃₋₁₈ alkenyl groups that may be employed include CH₃(CH₂)₇CH=CH(CH₂)₇-, which is the alkyl residue of oleic acid, CH₃(CH₂)₄CH=CH(CH₂)CH=CH(CH₂)₇-, i.e. the alkenyl residue of linoleic acid, CH₃(CH₂)CH=CH(CH₂)CH=CH(CH₂)CH=CH(CH₂)₇-, the alkenyl residue of α-linolenic acid, and CH₃(CH₂)₄CH=CH(CH₂)CH=CH(CH₂)CH=CH(CH₂)₄-, which is the alkenyl residue of γ-linolenic acid. Thus, often, at least one of the groups R¹, R² and R³ is (and preferably at least two of R¹, R² and R³, or for instance all three of groups R¹, R² and R³, are independently) selected from: (CH₂)₁₂CH₃, (CH₂)₁₄CH₃, (CH₂)₁₆CH₃, CH₃(CH₂)₇CH=CH(CH₂)₇, CH₃(CH₂)₄CH=CH(CH₂)CH=CH(CH₂)₇, CH₃(CH₂)CH=CH(CH₂)CH=CH(CH₂)CH=CH(CH₂)₇ and CH₃(CH₂)₄CH=CH(CH₂)CH=CH(CH₂)CH=CH(CH₂)₄. All three of R¹, R² and R³ in the triglyceride of formula (I) may be the same. Often however, in the triglyceride of formula (I), only two of R¹, R² and R³ are the same and the other (third) one of R¹, R² and R³ is different from the other two, or none of R¹, R² and R³ are the same (i.e. R¹, R² and R³ are three different groups).

In the acid of formula (II), R⁴ is usually unsubstituted or substituted C₄₋₃₀ alkyl or unsubstituted or substituted C₄₋₃₀ alkenyl. It may for instance be unsubstituted or substituted C₇₋₂₅ alkyl or unsubstituted or substituted C₇₋₂₅ alkenyl. More typically, however, R⁴ is unsubstituted C₇₋₂₅ alkyl or unsubstituted C₇₋₂₅ alkenyl. In some embodiments, for instance, R⁴ is unsubstituted C₇₋₂₁ alkyl or unsubstituted C₇₋₂₁ alkenyl, or, for instance, unsubstituted C₁₀₋₂₀ alkyl or unsubstituted C₁₀₋₂₀ alkenyl. Often, for example, R⁴ is unsubstituted C₁₃₋₁₈ alkyl or unsubstituted C₁₃₋₁₈ alkenyl.

In the ester of formula (III), R⁵ is usually unsubstituted or substituted C₁₋₆ alkyl, for instance unsubstituted or substituted C₁₋₄ alkyl. Typically, R⁵ is unsubstituted C₁₋₆ alkyl. R⁵ may for instance be unsubstituted C₁₋₄ alkyl. R⁶ in the ester of formula (III) is often unsubstituted or substituted C₄₋₃₀ alkyl or unsubstituted or substituted C₄₋₃₀ alkenyl. It may for instance be unsubstituted or substituted C₇₋₂₅ alkyl or unsubstituted or substituted C₇₋₂₅ alkenyl. More typically, R⁶ is unsubstituted C₇₋₂₅ alkyl or unsubstituted C₇₋₂₅ alkenyl. In some embodiments, for instance, R⁶ is unsubstituted C₇₋₂₁ alkyl or unsubstituted C₇₋₂₁ alkenyl, or, for instance, unsubstituted C₁₀₋₂₀ alkyl or unsubstituted C₁₀₋₂₀ alkenyl. Often, for example, R⁶ is unsubstituted C₁₃₋₁₈ alkyl or unsubstituted C₁₃₋₁₈ alkenyl.

The composition comprising at least one organic compound which comprises at least one oxygen atom, may for instance comprise one or more compounds selected from: a triglyceride of formula (I), an acid of formula (II) and an ester of formula (III), as defined above. Often, the composition comprises at least two different compounds selected from triglycerides of formula (I), acids of formula (II) and esters of formula (III), as defined above. Thus, the process may comprise contacting said composition with hydrogen in the presence of the solid catalyst.

In an example, the organic compound comprising at least one oxygen atom is triglyceride of formula (I) as defined above.

The process may for instance comprise contacting a composition with hydrogen in the presence of the solid catalyst, which composition comprises at least one triglyceride of formula (I) as defined above. Usually, the composition comprises at least two different triglycerides of formula (I) as defined above, or for instance at least three, at least four, or at least ten different triglycerides of formula (I) as defined above. The triglyceride, or triglycerides, of formula (I) in the composition are typically selected from triglycerides which are present in vegetable oil, animal fat or algae oil (i.e. oil produced by microalgae). For instance, the triglyceride or triglycerides in the composition may for instance be selected from triglycerides that are present in, say, palm oil (which comprises triglycerides of fatty acids selected from myristic acid, palmitic acid, linoleic acid, oleic acid and stearic acid) or soybean oil (which comprises triglycerides of fatty acids selected from palmitic acid, linolenic acid, linoleic acid, oleic acid and stearic acid). The triglyceride, or triglycerides, of formula (I) in the composition are typically therefore selected from triglycerides of formula (I) in which R¹, R² and R³ are independently selected from unsubstituted C₇₋₂₁ alkyl and unsubstituted C₇₋₂₁ alkenyl, or more typically from unsubstituted C₁₃₋₁₈ alkyl and unsubstituted C₁₃₋₁₈ alkenyl. Often, at least one of said R¹, R² and R³ groups is a group selected from (CH₂)₁₂CH₃, (CH₂)₁₄CH₃, (CH₂)₁₆CH₃, CH₃(CH₂)₇CH=CH(CH₂)₇, CH₃(CH₂)₄CH=CH(CH₂)CH=CH(CH₂)₇, CH₃(CH₂)CH=CH(CH₂)CH=CH(CH₂)CH=CH(CH₂)₇ and CH₃(CH₂)₄CH=CH(CH₂)CH=CH(CH₂)CH=CH(CH₂)₄. For instance, at least two of said R¹, R² and R³ groups, or even all three of said R¹, R² and R³ groups, may be selected from (CH₂)₁₂CH₃, (CH₂)₁₄CH₃, (CH₂)₁₆CH₃, CH₃(CH₂)₇CH=CH(CH₂)₇, CH₃(CH₂)₄CH=CH(CH₂)CH=CH(CH₂)₇, CH₃(CH₂)CH=CH(CH₂)CH=CH(CH₂)CH=CH(CH₂)₇ and CH₃(CH₂)₄CH=CH(CH₂)CH=CH(CH₂)CH=CH(CH₂)₄.

In another example, the organic compound comprising at least one oxygen atom is an acid of formula (II) as defined above.

The process may for instance comprise contacting a composition with hydrogen in the presence of the solid catalyst, which composition comprises at least one acid of formula (II) as defined above. The composition may comprise at least two different acids of formula (II) as defined above, or for instance at least three, at least four, or at least ten different acids of formula (II) as defined above. The acid, or acids, of formula (II) in the composition are typically selected from fatty acids which are present in vegetable oil, animal fat or algae oil (i.e. oil produced by microalgae). For instance, the acid or acids in the composition may be selected from fatty acids present in palm oil (i.e. myristic acid, palmitic acid, linoleic acid, oleic acid and stearic acid) or soybean oil (i.e. palmitic acid, linolenic acid, linoleic acid, oleic acid and stearic acid). The acid, or acids, of formula (II) in the composition are typically therefore selected from acids of formula (II) in which R⁴ is selected from unsubstituted C₇₋₂₁ alkyl and unsubstituted C₇₋₂₁ alkenyl, or more typically from unsubstituted C₁₃₋₁₈ alkyl and unsubstituted C₁₃₋₁₈ alkenyl. Often, for instance the acid or acids of formula (II) are selected from those in which R⁴ is selected from (CH₂)₁₂CH₃, (CH₂)₁₄CH₃, (CH₂)₁₆CH₃, CH₃(CH₂)₇CH=CH(CH₂)₇, CH₃(CH₂)₄CH=CH(CH₂)CH=CH(CH₂)₇, CH₃(CH₂)CH=CH(CH₂)CH=CH(CH₂)CH=CH(CH₂)₇ and CH₃(CH₂)₄CH=CH(CH₂)CH=CH(CH₂)CH=CH(CH₂)₄.

In yet another example, the organic compound comprising at least one oxygen atom is an ester of formula (III) as defined above.

The process may for instance comprise contacting a composition with hydrogen in the presence of the solid catalyst, which composition comprises at least one ester of formula (III) as defined above. The composition may comprise at least two different esters of formula (III) as defined above, or for instance at least three, at least four, or at least ten different ester of formula (III) as defined above.

A wide range of hydrocarbons may be produced by the process, and, as has been demonstrated in the Examples hereinbelow, the structure of the hydrocarbon produced will vary depending on the structure of the compound comprising the at least one heteroatom. Thus, depending on the structure of the compound comprising the at least one heteroatom, the hydrocarbon produced may be a particular aliphatic hydrocarbon, which may be a straight-chained or branched, saturated or unsaturated hydrocarbon, which may also comprise one or more cyclic aliphatic hydrocarbon rings. Alternatively, if the compound comprising the at least one heteroatom is an aromatic compound, for instance a mono-, di- or polycyclic aromatic compound, or an aliphatic compound which comprises one or more aromatic (e.g. aryl, arylene, heteoaryl or heteroarylene) groups, the hydrocarbon produced may be an aromatic compound or may comprise an aromatic moiety. For instance, it may be a mono-, di- or polycyclic aromatic hydrocarbon compound, or it may be an an aliphatic hydrocarbon which additionally comprises one or more mono-, di- or polycyclic aromatic rings (for instance one or more aryl or arylene groups).

As would be understood by the skilled person, the hydrocarbon produced by the process is generally not a hydrocarbon which is substituted with one or more groups that contain atoms other than carbon and hydrogen. Rather, it is generally a hydrocarbon within the normal meaning of the term, i.e. a compound consting only of carbon and hydrogen atoms. The hydrocarbon produced may for instance be an unsubstituted C₁₋₁₅₀ hydrocarbon as defined herein, which may be straight-chained, branched or cyclic, saturated or unsaturated, aliphatic or aromatic and may be uninterrupted or interrupted by one or more groups selected from arylene and a C₃₋₁₀ carbocyclic ring. Typically, it is a saturated hydrocarbon, as any unsaturated (alkene or alkyne) bonds may be hydrogenated during the process of the invention to become saturated C-C bonds. Often, it is a saturated aliphatic hydrocarbon. Alternatively, however, the hydrocarbon produced may be an aromatic hydrocarbon, for instance benzene.

Often, the unsubstituted C₁₋₁₅₀ hydrocarbon is uninterrupted. The C₁₋₁₅₀ hydrocarbon is usually a C₁₋₁₀₀ hydrocarbon, and is more typically a C₁₋₃₅ hydrocarbon, for instance a C₁₋₃₀ hydrocarbon. It may for instance be a C₄₋₃₅ hydrocarbon, or for instance a C₈₋₃₅ hydrocarbon, or for example a C₄₋₃₀ hydrocarbon, or a C₈₋₃₀ hydrocarbon. Diesel range hydrocarbons are particularly preferred. The unsubstituted C₁₋₁₅₀ hydrocarbon is often, therefore, a C₇₋₂₅ hydrocarbon or a C₇₋₂₁ hydrocarbon, or for example a C₈₋₂₅ hydrocarbon or a C₈₋₂₀ hydrocarbon, and may for example be a C₁₀₋₂₀ hydrocarbon or a C₁₄₋₂₀ hydrocarbon.

When the process comprises contacting a composition comprising two or more different organic compounds, each of which comprises at least one heteroatom, with said hydrogen in the presence of the solid catalyst, the process typically produces a mixture comprising different hydrocarbons, each of which may be as further defined herein for the hydrocarbons produced by the process.

Often, for example when the process is performed on one or more compounds of formula (I), (II) or (III) as defined hereinbefore, the process is a process for producing one or more hydrocarbons selected from hydrocarbons of the following formulae: CH₃-R¹, CH₃-R², CH₃-R³, CH₃-R⁴, H-R⁵ and CH₃-R⁶, wherein R¹, R², R³, R⁴, R⁵ and R⁶ are as defined hereinbefore for the compounds of formulae (I), (II) and (III), provided that R¹, R², R³, R⁴, R⁵ and R⁶ are typically unsubstituted in the hydrocarbons of formulae CH₃-R¹, CH₃-R², CH₃-R³, CH₃-R⁴, H-R⁵ and CH₃-R⁶. R¹, R², R³, R⁴ and R⁶ in the hydrocarbons of formulae CH₃-R¹, CH₃-R², CH₃-R³, CH₃-R⁴ and CH₃-R⁶ are also typically C₁₋₄₀ alkyl groups, rather than C₂₋₄₀ alkenyl or C₂₋₄₀ alkynyl groups, because unsaturated alkene or alkyne bonds often become saturated by hydrogenation during the process. Thus, R¹, R², R³, R⁴ and R⁶ in the hydrocarbons of formulae CH₃-R¹, CH₃-R², CH₃-R³, CH₃-R⁴ and CH₃-R⁶ that may be produced are typically unsubstituted C₁₋₄₀ alkyl groups. They may for instance be unsubstituted C₄₋₃₀ alkyl groups, or for instance unsubstituted C₇₋₂₅ alkyl. In some examples, for instance, R¹, R², R³, R⁴ and R⁶ in the hydrocarbons of formulae CH₃-R¹, CH₃-R², CH₃-R³, CH₃-R⁴ and CH₃-R⁶ are unsubstituted C₇₋₂₁ alkyl groups, or, for instance, unsubstituted C₁₀₋₂₀ alkyl, for example unsubstituted C₁₃₋₁₈ alkyl, groups. R⁵ in the hydrocarbon H-R⁵ is typically unsubstituted C₁₋₁₀ alkyl, for instance unsubstituted C₁₋₆ alkyl or, for example, unsubstituted C₁₋₄ alkyl.

Thus, when the organic compound comprising at least one heteroatom is a triglyceride of formula (I) as defined above, the process generally produces hydrocarbons of formulae CH₃-R¹, CH₃-R² and CH₃-R³, wherein R¹, R² and R³ are as defined above for the triglyceride of formula (I). If two or more of R¹, R² and R³ in the triglyceride of formula (I) are different from one another, e.g. if they have a different number of carbon atoms, then the process will produce a mixture comprising two or more different hydrocarbons.

Thus, in one example, the organic compound comprising at least one heteroatom is a triglyceride of formula (I), and the process is for producing hydrocarbons of formulae CH₃-R¹, CH₃-R² and CH₃-R³, wherein R¹, R² and R³ are as defined herein for the triglyceride of formula (I). Typically, R¹, R² and R³ in the hydrocarbons produced of formulae CH₃-R¹, CH₃-R² and CH₃-R³ are independently selected from unsubstituted C₁₋₄₀ alkyl groups. They may for instance be independently selected from unsubstituted C₄₋₃₀ alkyl groups, or for instance from unsubstituted C₇₋₂₅ alkyl groups. In some examples, for instance, R¹, R², R³ in the hydrocarbons of formulae CH₃-R¹, CH₃-R² and CH₃-R³ are independently selected from unsubstituted C₇₋₂₁ alkyl groups, or, for instance, from unsubstituted C₁₀₋₂₀ alkyl groups, for example from unsubstituted C₁₃₋₁₈ alkyl groups.

Similarly, when the process comprises contacting a composition with hydrogen in the presence of the solid catalyst, which composition comprises at least one triglyceride of formula (I) as defined above, the process is typically a process for producing one or more hydrocarbons selected from hydrocarbons of formulae CH₃-R¹, CH₃-R² and CH₃-R³, wherein R¹, R² and R³ are as defined for the triglyceride of formula (I). The composition may for instance comprise at least two different triglycerides of formula (I) as defined above, or for instance at least three, at least four, or at least ten different triglycerides of formula (I) as defined above, in which case the process is typically a process for producing a plurality of different hydrocarbons selected from hydrocarbons of formulae CH₃-R¹, CH₃-R² and CH₃-R³, wherein R¹, R² and R³ are as defined anywhere herein for the triglycerides of formula (I). Often, however, R¹, R² and R³ in the hydrocarbons produced of formulae CH₃-R¹, CH₃-R² and CH₃-R³ are independently selected from unsubstituted C₁₋₄₀ alkyl groups. They may for instance be independently selected from unsubstituted C₄₋₃₀ alkyl groups, or for instance from unsubstituted C₇₋₂₅ alkyl groups. In some embodiments, for instance, R¹, R², R³ in the hydrocarbons of formulae CH₃-R¹, CH₃-R² and CH₃-R³ produced are independently selected from unsubstituted C₇₋₂₁ alkyl groups, or, for instance, from unsubstituted C₁₀₋₂₀ alkyl groups, for example unsubstituted C₁₃₋₁₈ alkyl groups.

When the organic compound comprising at least one heteroatom is an acid of formula (II) as defined above, the process is typically for producing a hydrocarbon of formula CH₃-R⁴, wherein R⁴ is as defined anywhere herein for the acid of formula (II).

Similarly, when the process comprises contacting a composition with hydrogen in the presence of the solid catalyst, which composition comprises at least one acid of formula (II) as defined above, the process is typically a process for producing one or more hydrocarbons selected from hydrocarbons of formulae CH₃-R⁴, wherein R⁴ is as defined for the acid of formula (II). The composition may for instance comprise at least two different acids of formula (II) as defined above, or for instance at least three, at least four, or at least ten different acids of formula (II) as defined above, in which case the process is typically a process for producing hydrocarbons selected from hydrocarbons of formula CH₃-R⁴, wherein R⁴ is as defined anywhere herein for the acids of formula (II).

Typically, however, the or each R⁴ in the hydrocarbon or hydrocarbons produced of formulae CH₃-R⁴ is independently an unsubstituted C₁₋₄₀ alkyl group. It may for instance be an unsubstituted C₄₋₃₀ alkyl group, or for instance an unsubstituted C₇₋₂₅ alkyl group. In some embodiments, for instance, the or each R⁴ in the hydrocarbon or hydrocarbons of formula CH₃-R⁴ is independently an unsubstituted C₇₋₂₁ alkyl group, or, for instance, unsubstituted C₁₀₋₂₀ alkyl, or for example unsubstituted C₁₃₋₁₈ alkyl.

When the organic compound comprising at least one heteroatom is an ester of formula (III) as defined above, the process is typically a process for producing a hydrocarbon of formula CH₃-R⁶, wherein R⁶ is as defined anywhere herein for the ester of formula (III). The process may also be for producing a second hydrocarbon of formula H-R⁵ wherein R⁵ is as defined herein for the ester of formula (III) and is typically unsubstituted.

Similarly, when the process comprises contacting a composition with hydrogen in the presence of the solid catalyst, which composition comprises at least one ester of formula (III) as defined above, the process is typically a process for producing one or more hydrocarbons selected from hydrocarbons of formulae CH₃-R⁶, wherein R⁶ is as defined for the ester of formula (III). Optionally, the process may be for additionally producing one or more compounds of formula H-R⁵, wherein R⁵ is as defined herein for the ester of formula (III), and is typically unsubstituted. The composition may for instance comprise at least two different esters of formula (III) as defined above, or for instance at least three, at least four, or at least ten different esters of formula (III) as defined above, in which case the process is typically a process for producing a plurality of different hydrocarbons selected from hydrocarbons of formula CH₃-R⁶, wherein R⁶ is as defined anywhere herein for the ester of formula (III). Again, the process may optionally be for additionally producing one or more compounds of formula H-R⁵, wherein R⁵ is as defined herein for the ester of formula (III). Typically, the or each R⁶ in the hydrocarbon or hydrocarbons produced of formulae CH₃-R⁶ is independently an unsubstituted C₁₋₄₀ alkyl group. It may for instance be an unsubstituted C₄₋₃₀ alkyl group, or for instance an unsubstituted C₇₋₂₅ alkyl group. In some embodiments, for instance, the or each R⁶ in the hydrocarbon or hydrocarbons of formula CH₃-R⁶ is independently an unsubstituted C₇₋₂₁ alkyl group, or, for instance, unsubstituted C₁₀₋₂₀ alkyl, or for example unsubstituted C₁₃₋₁₈ alkyl.

The hydrogen, with which the organic compound comprising at least one heteroatom is contacted in the process, may be molecular hydrogen, i.e. H₂. The hydrogen may be provided in the form of H₂ gas, which may be neat H₂ gas or "dilute" H₂ gas (for instance it may be a mixture of H₂ gas and an inert gas such as N₂ or a noble gas like argon).

Alternatively, the hydrogen employed in the process may be provided by a chemical source of hydrogen, for instance by a chemical reductant or a hydrogen donor (transfer agent). The hydrogen may for instance be provided by a chemical reductant such as sodium borohydride, aluminium hydride, or an active metal, or by a hydrogen donor (transfer agent) such as isopropanol. When the hydrogen is provided by such a chemical source, it is not necessarily provided in the form of molecular hydrogen. Rather, it is usually instead provided in the form of atomic hydrogen, H, or for instance as a hydride anion, H⁻ or a proton, H⁺.

The step of contacting the organic compound comprising at least one heteroatom with hydrogen, in the presence of the solid catalyst, may be carried out in the presence of a solvent, or without a solvent.

Usually, the step is performed in the presence of a solvent. Often, however, when the heteroatom in the organic compound is sulfur or nitrogen, and no oxygen atom is present in the compound (so that the process involves HDS and/or HDN, but not HDO) no solvent is employed, and the reaction is generally carried out in the gas phase rather than the liquid phase. Otherwise, when the organic compound is an organic compound comprising at least one oxygen atom, the step of contacting the organic compound with hydrogen, in the presence of the solid catalyst, is usually carried out in the presence of a solvent, and is typically therefore carried out in the liquid phase.

The solvent employed is typically an organic solvent. Any suitable organic solvent may be employed. Usually, it is an apolar organic solvent. For instance, the solvent employed is typically hydrophobic, and is usually therefore immiscible with water. The solvent may for instance be an unsubstituted, and uninterrupted, saturated C₁₋₁₀ hydrocarbon compound. Alternatively, the solvent may be an unsubstituted, and saturated, C₃₋₁₀ carbocyclic ring, which may be monocyclic or bicyclic. The solvent may for instance comprise, or be, decalin, cyclohexane, hexane or pentane. Often, the solvent comprises (or is) decalin.

The step of contacting the organic compound comprising at least one heteroatom with hydrogen may be carried out at any suitable temperature. It is typically however carried out at temperature greater than room temperature, e.g. at a temperature of greater than about 20°C. The step of contacting the organic compound with hydrogen is typically therefore carried out in the presence of heating. The step of contacting the organic compound with hydrogen is often, for instance, performed at a temperature of at least 50 °C. Usually, it is carried out at a temperature of at least 100 °C, or for instance at a temperature of at least 150 °C. It may for instance be carried out at a temperature of at least 200 °C, or for instance at a temperature of at least 250 °C.. Often, for instance, the step of contacting the organic compound comprising at least one heteroatom with hydrogen is carried out at a temperature of from 35 °C to 500 °C, or for instance at a temperature of from 50 °C to 450 °C, e.g. at at temperature of from 100 °C to 400 °C. The step of contacting the organic compound with hydrogen may for instance be performed at a temperature of from 200 °C to 400 °C, or for instance at a temperature of from 250 °C to 350 °C, or for example from 270 °C to 330 °C.

The step of contacting the organic compound comprising at least one heteroatom with hydrogen may be carried out at any suitable pressure. The term "pressure" here, typically refers to the pressure of hydrogen gas. The step is typically carried out at a pressure of at least 1 bar, but any suitable pressure may be employed. Often, for instance, the step of contacting the organic compound with hydrogen is carried out at a pressure of at least 10 bar, for instance at least 50 bar, or at least 100 bar. In some examples, the step of contacting the organic compound with hydrogen is carried out at a pressure of at least 200 bar, for instance at least 250 bar, or at least 280 bar.

The step of contacting the organic compound with hydrogen may for instance be carried out at a pressure of from 1 bar to 500 bar. Usually, however, the step is carried out at a pressure of from 10 bar to 450 bar, for instance from 100 bar to 400 bar. The step of contacting the organic compound with hydrogen may for instance be carried out at a pressure of from 250 bar to 350 bar, for instance at a pressure of from 280 bar to 320 bar.

Usually, in the process, the molar ratio of (a) the organic compound comprising at least one heteroatom (or, when more than one such organic compound is present, all of the organic compounds comprising at least one heteroatom) to (b) the transition metal of the phosphide of the catalyst is at least 2:1. More typically, it is at least 3:1, for instance at least 5:1 or for example at least 8:1, or at least 10:1. The ratio may for instance be from 5:1 to 50:1, or for example from 8:1 to 80:1, or from 10:1 to 100:1. In some examples, the ratio is at least 100:1, for instance at least 1000:1 or for example at least 10000:1, or at least 100000:1.

The process may be a continuous process or a batch process.

The step of contacting the organic compound comprising at least one heteroatom with hydrogen is carried out for any suitable length of time. If the process is performed as a batch process, then the step is typically carried out until the reaction is essentially complete, e.g. until a yield of hydrocarbon products which is at or close to the theoretical maximum yield has been achieved. Often, for instance, the step of contacting the organic compound with hydrogen is carried out for several hours, for instance at least 5 hours, or for example at least 10 hours or at least 20 hours. Alternatively, of course, the process may be performed as a continuous process, in which case the step of contacting may be performed indefinitely.

Prior to the step of contacting the organic compound comprising at least one heteroatom with hydrogen, a catalyst regeneration step may be performed. This typically comprises treating the catalyst with hydrogen. The catalyst may for example be treated with hydrogen at a temperature of from 200 °C to 800 °C, for instance at a temperature of from 500 °C to 700 °C. The catalyst may be heated at the temperature for at least one hour, for instance at least 2 hours, or for example at least 3 hours, e.g. from 2 to 5 hours, for instance for about 3 hours.

The process may further comprise a step of recovering said hydrocarbon, or, when more than one hydrocarbon is produced in the process, a step of recovering said hydrocarbons. The hydrocarbon or hydrocarbons produced may be recovered by any suitable conventional means, for example by solvent extraction or by distillation. Such separation techniques are well known to the skilled person.

### Catalyst

The catalyst employed in the process is the composition of invention, which comprises:
(a) a first metal, which is a transition metal suitable for catalysing the hydrogenation of organic compounds, wherein:
   the composition comprises nanoparticles of the first metal and the first metal is platinum or palladium, and
   the nanoparticles have a particle size of from 0.5 nm to 500 nm, and
   the first metal is in the oxidation state 0, and
   the first metal is present in an amount of from 0.01 % by weight to 3.0 % by weight, based on the total weight of the composition;
(b) a phosphide of one or more transition metals, wherein:
   the phosphide of one or more transition metals is molybdenum phosphide, and
   the phosphide of one or more transition metals is present in an amount of at least 5.0 % by weight based on the total weight of the composition; and
(c) a solid catalyst support, wherein the solid catalyst support comprises SiO₂.

The first metal may for instance be palladium.

The first metal may be platinum.

Also described herein, the first metal is a transition metal suitable for catalysing the hydrogenation of organic compounds. Transition metals that are suitable for catalysing the hydrogenation of organic compounds (such as for instance alkenes) are well known to the skilled person, and can also easily be identified by the skilled person without undue burden. The first metal described hereinin may for instance be Ti, V, Cr, Mn, Fe, Co, Ni, Cu, Zr, Nb, Mo, Tc, Ru, Rh, Ag, Hf, Ta, W, Re, Os, Ir or Au.

Also described herein, the first metal is typically rhodium, iridium, ruthenium, osmium, nickel, copper, silver or gold. It may for instance be rhodium, ruthenium, silver or gold.

Also described herein, the first metal is typically rhodium, iridium, ruthenium or osmium. It may for instance be rhodium, iridium or ruthenium, for instance rhodium or ruthenium. The first metal described herein is often, for instance, rhodium.

The first metal is present in the oxidation state (0), i.e. in metallic form.

The first metal is present in the form of particles (which usually comprise nanoparticles) of the metal. Additionally, individual atoms of the metal may be present, as may clusters of two or more atoms of the metal.

The first metal is usually present on the surface of the solid catalyst support. The first metal may thus be referred to as being "supported on" or "supported by" the solid catalyst support.

The phosphide of one or more transition metals is also usually present on the surface of the solid catalyst support. The phosphide of one or more transition metals may also therefore be referred to as being "supported on" or "supported by" the solid catalyst support.

The phosphide of one or more transition metals is molybdenum phosphide.

The phosphide of one or more transition metals may for instance be a phosphide of molybdenum and one or more other transition metals.

The phosphide may be a phosphide of a plurality of transition metals, one of which is molybdenum. For instance, the phosphide may be a phosphide of molybdenum and another transition metal. The other transition metal may for instance be nickel, cobalt, iron, tungsten, niobium or tantalum.

Also described herein, the phosphide of one or more transition metals may be a phosphide of a single transition metal, or it may be a mixed phosphide compound, comprising both the phosphorus (phosphide) and two or more different transition metals. Often, however, the phosphide described herein is a phosphide of a single transition metal.

Also described herein, the phosphide of one or more transition metals may be a phosphide of one or more transitional metals, at least one of which is selected from nickel, cobalt, iron, tungsten, niobium and tantalum.

Also described herein, the phosphide of one or more transition metals may for instance be a phosphide of one or more transitional metals selected from nickel, cobalt, iron, tungsten, niobium and tantalum. Thus, the phosphide described herein may be nickel phosphide, cobalt phosphide, iron phosphide, tungsten phosphide, niobium phosphide or tantalum phosphide. Alternatively, the phosphide described herein may be a phosphide of two or more of nickel, cobalt, iron, tungsten, niobium and tantalum.

The support may for instance consist of SiO₂.

As used herein the term "nanoparticle" means a microscopic particle whose size is typically measured in nanometres (nm). A nanoparticle has a particle size of from 0.5 nm to 500 nm. For instance, a nanoparticle may have a particle size of from 0.5 nm to 200 nm. More often, a nanoparticle has a particle size of from 0.5 nm to 100 nm, or for instance from 1 nm to 50 nm. A particle, for instance a nanoparticle, may be spherical or non-spherical. Non-spherical particles may for instance be plate-shaped, needle-shaped or tubular. The term "particle size" as used herein means the diameter of the particle if the particle is spherical or, if the particle is non-spherical, the volume-based particle size. The volume-based particle size is the diameter of the sphere that has the same volume as the non-spherical particle in question.

As used herein the term "cluster" refers to an ensemble of two or more metal atoms where direct and substantial metal-metal bonding is present between the atoms. A cluster is typically intermediate in size between a small molecule (such as a water molecule or a glucose molecule) and a bulk solid, and may have a similar size to a nanoparticle. Thus, clusters often have particle sizes of from 0.5 nm to 500 nm. A cluster may for instance have a particle size of from 0.5 nm to 200 nm or, for instance, from 0.5 nm to 100 nm. Often, a cluster has a particle size of from 1 nm to 50 nm.

As mentioned above, the composition suitable for use as a catalyst comprises nanoparticles of said first metal. The nanoparticles may for instance have a mean particle size of from 0.5 nm to 100 nm, or for instance from 1 nm to 50 nm. Usually, however, in the present invention, the nanoparticles of said first metal have a mean particle size of from 0.5 nm to 20 nm, for instance from 0.5 nm to 10 nm. Nanoparticles having a mean particle size of from 1 to 10 nm are particularly preferred, for instance nanoparticles having a mean particle size of about 5 nm.

The composition suitable for use as a catalyst may comprise individual atoms of said first metal. Said individual atoms of the first metal may be present in addition to nanoparticles of the first metal, as defined above.

Similarly, the composition suitable for use as a catalyst may comprise clusters of two or more individual atoms of said first metal. Such clusters may comprise from, say 2 to 500, or from 2 to 50, or for instance from 2 to 20, e.g. from 2 to 10, individual atoms of said metal. Said clusters of the metal may be present in addition to nanoparticles of the individual metal, as defined above.

Typically, nanoparticles, clusters and/or individual atoms of the first metal as defined above are supported on the solid catalyst support.

The phosphide of one or more transition metals is also typically present in the form of particles (which usually comprise nanoparticles) of the phosphide. Thus, usually, the catalyst comprises nanoparticles of said phosphide of one or more transition metals. The nanoparticles of the phosphide may for instance have a mean particle size of from 0.5 nm to 400 nm, or for instance from 0.5 nm to 200 nm, for example from 1 nm to 100 nm, or for instance from 1 nm to 50 nm. Usually, however, in the present invention, the nanoparticles of the phosphide have a mean particle size of from 0.5 nm to 30 nm, for instance from 0.5 nm to 20 nm, or from 0.5 nm to 10 nm. Nanoparticles of the phosphide having a mean particle size of from 1 to 10 nm may for instance be employed.

In addition to the first metal and the phosphide of one or more transition metals, the composition suitable for use as a catalyst also comprises a solid catalyst support. As the skilled person will appreciate, the role of the catalyst support is to increase the dispersion of the active components - in this case the first metal and the phosphide of one or more transition metals - and to prevent sintering, to improve mechanical strength, and to assist catalysis. Catalyst supports typically have high surface areas, are thermally very stable and are able to withstand processes that may be desired to activate a precatalyst or regnerate the catalyst (for example, exposure to a stream of hydrogen at high temperatures). A wide range of materials that have all these properties and are therefore suitable catalyst supports are known to the skilled person.

The solid catalyst support comprises SiO₂. The support may for instance consist of SiO₂.

Also described herein are solid catalyst support materials, including, for instance, oxides of one or more metals, e.g. alumina; silicates; aluminosilicates; zeolites; and various forms of carbon, e.g. carbon black, activated charcoal, fullerenes and carbon nanotubes.

Also described herein, the support material may for instance comprise a silicate, an aluminosilicate, a zeolite, an oxide of one or more metals, or carbon. The oxide of one or more metals may for instance comprise, or be, alumina. The carbon support may for instance comprise carbon black, activated charcoal, fullerenes or carbon nanotubes. The zeolite may for example be selected from pentasil zeolites, including ZSM-5, ABC-6 zeolites including SSZ-13, and faujasites including zeolite X and zeolite Y, and mordenite. Often, the catalyst comprises one or more of ZSM-5, H-ZSM-5 and SSZ-13.

Also described herein, the catalyst support may comprise a silicate or a zeolite. In particular, the solid catalyst support described herein may be a zeolite. The zeolite may be any of the zeolites listed above, particularly ZSM-5.

The first metal is present in an amount of from 0.01 % by weight to 3 % by weight, based on the total weight of the composition suitable for use as a catalyst, for instance in an amount of from 0.01 % by weight to 2.0 % by weight. Often, the first metal is present in an amount of from 0.5 % by weight to 1.5 % by weight, for example in an amount of from 0.5 % by weight to 1.0 % by weight, based on the total weight of the composition suitable for use as a catalyst.

Also described herein, in the composition suitable for use as a catalyst, the first metal may be present in an amount of at least 0.001 % by weight based on the total weight of the composition, for instance in an amount of at least 0.005 % by weight. Often, the first metal described herein is present in an amount of at least 0.5 % by weight, for example in an amount of at least about 1 % by weight, based on the total weight of the composition.

The phosphide of one or more transition metals is typically present in the composition suitable for use as a catalyst in an amount of at least 5.0 % by weight, or at least 8.0 % by weight.

Also described herein, the phosphide of one or more transition metals may be present in the composition suitable for use as a catalyst in an amount of at least 0.1 % by weight based on the total weight of the composition. The phosphide described herein may for instance be present in an amount of at least 0.5 % by weight based on the total weight of the composition, or in an amount of at least 2.0 % by weight.

Also described herein, the phosphide of one or more transition metals may for instance be present in an amount of from 0.1 % by weight to 30 % by weight, based on the total weight of the composition suitable for use as a catalyst, for instance in an amount of from 0.5 % by weight to about 25 % by weight, or for example in an amount of from 1.0 % by weight to 20 % by weight.

Typically, the balance of the catalyst is made up of the solid catalyst support.

The composition suitable for use as catalyst comprises (a) nanoparticles of Pd or Pt, and (b) molybdenum phosphide. The composition suitable for use as catalyst may for instance comprise (a) nanoparticles of Pd, and (b) molybdenum phosphide. Alternatively, the composition suitable for use as catalyst may comprise (a) nanoparticles of Pt, and (b) molybdenum phosphide. The composition suitable for use as catalyst may for instance comprise (a) nanoparticles of Pd or Pt, and (b) nanoparticles of molybdenum phosphide. The composition suitable for use as catalyst may for instance comprise (a) nanoparticles of Pd, and (b) nanoparticles of molybdenum phosphide. Alternatively, the composition suitable for use as catalyst may comprise (a) nanoparticles of Pt, and (b) nanoparticles of molybdenum phosphide. The nanoparticle sizes of both the first metal and the phosphide may be as further defined above.

Usually, in these embodiments, the nanoparticles are on the surface of the solid catalyst support. Also, typically, in these embodiments, the composition suitable for use as catalyst further comprises individual atoms of the first metal. Typically, in this embodiment, the nanoparticles and the individual atoms of the first metal are on the surface of the compound.

Compositions suitable for use as catalysts having a high BET surface area, of for instance at least 10 m²/g, advantageously lead to high activities and yields in the process of the present invention. Typically, therefore, the composition suitable for use as catalyst has a BET surface area of at least 10 m²/g. The composition suitable for use as catalyst may for instance have a BET surface area of at least 100 m²/g, or for instance at least 200 m²/g, for example at least 250 m²/g or at least 300 m²/g, such as, for instance, at least 500 m²/g, or at least 1,000 m²/g. The catalyst may for instance have a BET surface area of from 10 m²/g to 500 m²/g, or for instance a BET surface area of from 100 m²/g to 300 m²/g. A BET surface area of from 200 m²/g to 500 m²/g is particularly preferred, as is a BET surface area of from 250 to 500 m²/g, or a BET surface area of from 300 to 500 m²/g.

The composition suitable for use as catalyst is typically obtained by treating the solid catalyst support with (a) a precursor compound comprising said first metal; (b) one or more precursor compounds comprising said one or more transition metals for synthesising the phosphide of the one or more transition metals; (c) a precursor compound comprising phosphorus; and (d) a carboxylic acid. Typically, treating the solid catalyst support with (a), (b), (c) and (d) comprises treating the solid catalyst support with one or more aqueous solutions of (a), (b), (c) and (d). The precursor compounds comprising the first metal and the one or more transition metals for synthesising the phosphide are typically water-soluble salts of the respective metals, for instance halides or nitrates of the metals or metallate salts. Such precursor compounds may be prepared using known synthesis methods, or may be bought. Many such compounds are commercially available. Typically, the phosphorus precursor compound is a hydrogen phosphate compound, for instance diammonium hydrogen phosphate. The carboxylic acid may for instance be citric acid. Any one or more of the components (a), (b), (c) and (d) in the above method may be independently as further defined in the Example synthesis procedures described hereinbelow. Typically, the solid catalyst support is calcined before the step of treating it with (a), (b), (c) and (d). After the treating step, the method for producing the catalyst typically further comprises drying the resulting composition. Calcination (heating the resulting product in air) may then be performed. The composition is typically calcined at a temperature of at least 300 °C, or at least 400 °C, and typically at a temperature of 400 to 700 °C, e.g. about 450 to 550 °C. The composition is typically then treated with hydrogen gas. The composition suitable for use as catalyst may for example be treated with hydrogen at a temperature of from 200 °C to 800 °C, for instance at a temperature of from 500 °C to 700 °C. The composition suitable for use as catalyst may be heated at the temperature for at least one hour, for instance at least 2 hours, or for example at least 3 hours, e.g. from 2 to 5 hours, for instance for about 3 hours.

The composition suitable for use as catalyst may be a composition which is obtainable by, or which has been obtained by, a method as defined above, in the preceding paragraph.

### Composition and catalyst of the invention, and uses thereof

The composition that is suitable for use as a hydrodeoxygenation catalyst is a novel composition *per se.*

Accordingly, the invention also provides a composition, which composition comprises:
(a) a first metal, which is a transition metal suitable for catalysing the hydrogenation of organic compounds, wherein:
   the composition comprises nanoparticles of the first metal and the first metal is platinum or palladium, and
   the nanoparticles have a particle size of from 0.5 nm to 500 nm, and
   the first metal is in the oxidation state 0, and
   the first metal is present in an amount of from 0.01 % by weight to 3.0 % by weight, based on the total weight of the composition;
(b) a phosphide of one or more transition metals, wherein:
   the phosphide of one or more transition metals is molybdenum phosphide, and
   the phosphide of one or more transition metals is present in an amount of at least 5.0 % by weight based on the total weight of the composition; and
(c) a solid catalyst support, wherein the solid catalyst support comprises SiO₂.

The composition of the invention that is suitable for use as a catalyst may be as further defined anywhere hereinbefore.

The composition of the invention may be employed as a catalyst, as described hereinbefore.

The invention also provides the use of the composition of the invention as an HDO, catalyst.

The present invention is further illustrated in the Example which follows:

### EXAMPLE

The Example herein describes the facile synthesis and the hydrodeoxygenation (HDO) studies of multifunctional catalysts, which are composed of metal and metal phosphide supported on SiO₂ ("metal-metal phosphide/SiO₂"). HDO aims to remove oxofunctionalized mixture of light-to-medium hydrocarbons in bio-oil while prevents catalyst instability due to coke formation. A facile method to produce metal-metal phosphide/SiO₂ as an excellent HDO catalyst has been developed. The first metals according to the invention are Pt and Pd, with other metals providing a comparison. The metal phosphide of the invention is MoP, with other metal phosphides providing a comparison. The catalyst was capable of high activity and high selectivity towards oxygen free products by applying a wide range of substrates, i.e. phenol, anisole, guaiacol and 2,6-dimethoxyphenol, and showed weak transalkylation affinity which prevents coke formation. For a more challenging conversion, the catalyst exhibited effective HDO performance in real bio-oil conversion comprising oxofunctionalized mixture.

### General synthesis procedure

Typically, a P:metal molar ratio of 1:1 was employed for MoP or WP and of 1:2 for Ni₂P, Co₂P or Fe₂P by dissolving proper amount of metal precursors and proper amount of diammonium hydrogen phosphate ((NH₄)₂HPO₄) and double amount of citric acid in a certain amount of metal precursor dissolved de-ionized water, the volume of which was determined by the water adsorption volume of SiO₂. The solution was stirred for 1 h and then dropwise added to SiO₂ with proper amount. The obtained glue-like sample was dried in an oven at 397 K for overnight and calcined at proper temperature in muffle furnace for several hours at rising rate of 5 K/min. The calcined sample was then reduced in H₂, at a flow rate of 20 cm³/min and a heating rate of 2 K/min to a proper temperature, with the target temperature held for another several hours. The sample was subsequently cooled down to room temperature and protected with N₂ for 1 h prior to removal from the tube reactor for catalytic reaction.

### Example synthesis procedure

For the synthesis of Pt(0.9 wt%)-MoP(10 wt %)/SiO₂, (NH₄)₆Mo₇O₂₄.4H₂O (0.05495 g), ((NH₄)₂HPO₄) (0.0412 g), citric acid (0.11975 g) were dissolved in 0.5 mL H₂PtCl₆ solution (11.242 mg/L). The mixture was stirred for 1 h and then dropwise added to calcined SiO₂ (0.25 g). The obtained glue-like sample was dried in an oven at 397 K for overnight and calcined at 773 K in flow air at a flow rate of 20 cm³/min) or muffle furnace for 5 h at rising rate of 5 K/min. The calcined sample was then reduced in H₂, at a flow rate of 20 cm³/min and a heating rate of 2 K/min to 923 K, with the target temperature held for 3 h. The sample was subsequently cooled down to room temperature and protected with N₂ for 1 h prior to removal from the tube reactor for catalytic reaction.

### General procedure for the catalytic reaction

In a typical catalytic reaction, a proper amount of catalytic substrate or bio-oil, catalyst and decalin were added to a Parr reactor (reactor volume, 50 mL) and sealed. After finishing purging the reactor with H₂, the reaction was carried out with a proper pressure H₂ (room temperature, 25 °C) at high temperature for a certain time at a stirring speed of 900 rpm. After the reaction was completed and cooled down to room temperature, the organic mixture of the product was collected and analyzed by GC-MS.

### Example procedure for the catalytic reaction

Using the hydrodeoxygenation of 2,6-dimethoxyphenol as the example, we loaded 2,6-dimethoxyphenol (154.16 mg, 1 mmol) into a stainless steel Parr autoclave (reactor volume, 50 mL) with decalin (10 mL) and Pt-MoP/SiO₂ (0.9 wt% Pt, 10 wt% MoP, 63.96 mg). After the autoclave was sealed, it was purged with H₂ for three times and then placed under 30 MPa H₂ at room temperature. The reaction was carried out at 300 °C for 12 h with a stirring speed of 900 rpm. After reaction, the organic product was collected and analyzed by GC-MS.

### Detailed Procedures and Results

### 1. Synthesis of supported MoP

### 1.1 Synthesis of MoP/SiO₂

The detailed procedure for the synthesis of MoP/SO₂ is as follows:
For the synthesis of MoP(10 wt%)/SiO₂ (in the following part, % is short for wt%), (NH₄)₆Mo₇O₂₄.4H₂O (0.05495 g, 0.044 mmol), ((NH₄)₂HPO₄) (0.0412 g, 0.31 mmol), citric acid (0.11975 g, 0.62 mmol) were dissolved in 0.5 mL deionized water. SiO₂ was calcined in advance at 773 K for 2 h. The mixture was stirred for 1 h and then dropwise added to calcined SiO₂ (0.25 g). The obtained glue-like sample was dried in an oven at 397 K for overnight and calcined at 773 K in flow air at a flow rate of 20 cm³/min) or muffle furnace for 5 h at rising rate of 5 K/min. The calcined sample was then reduced in H₂, at a flow rate of 20 cm³/min and a heating rate of 2 K/min to 923 K, with the target temperature held for 3 h. The sample was subsequently cooled down to room temperature and protected with N₂ for 1 h prior to removal from the tube reactor for catalytic reaction. For the synthesis of samples with lower or higher MoP loading amount, increasing the quantity of (NH₄)₆Mo₇O₂₄.4H₂O, (NH₄)₂HPO₄) and citric acid proportionally and maintaining the quantity of water and SiO₂.would be applied.

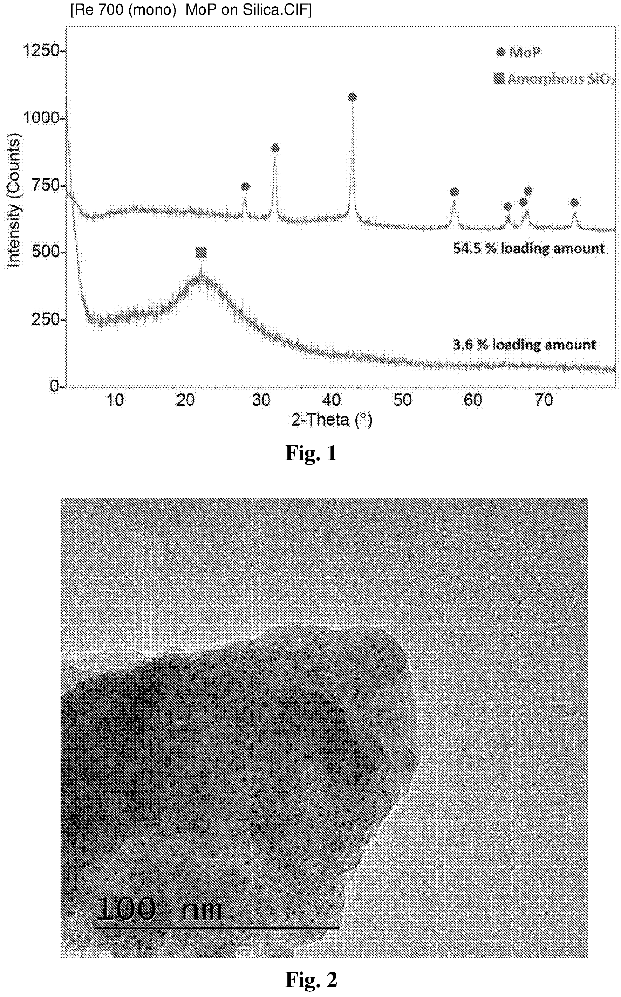

Figure 1 shows the X-ray diffraction (XRD) patterns of synthesized MoP supported on SiO₂ with two different loading amounts. With regarding the higher loading amount of 54.5 wt %, the XRD peaks could be indexed to the hexagonal structure of MoP (card no. 24-0771). For the sample with lower loading amount of 3.6 wt %, merely broaden peak could be observed, which are attributed to the amorphous structure of SiO₂.It should be noted that the XRD pattern for the sample with medium loading amount of 10 wt % also appeared to be amorphous SiO₂ peak (the XRD pattern was not shown here), an indicative of the small size of synthesized MoP under low loading amount. Figure 2 shows the transmission electron microscopy (TEM) of as-prepared MoP(3.6 wt%)/SiO₂, which reveals the nanoparticles in black dots mono-dispersed on the support.

### 1.2 Synthesis of MoP/ZSM-5

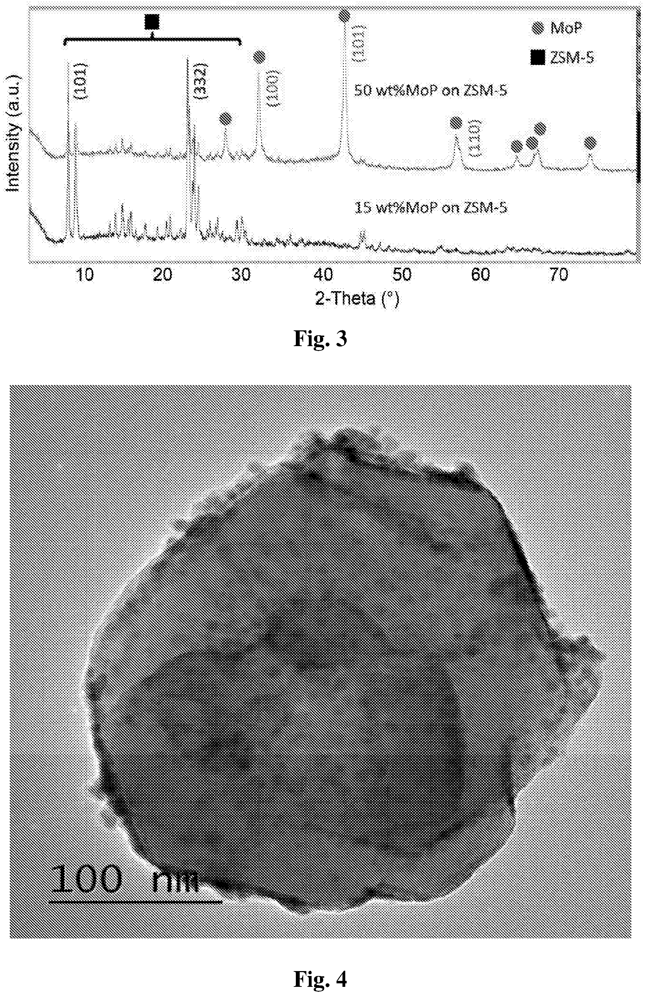

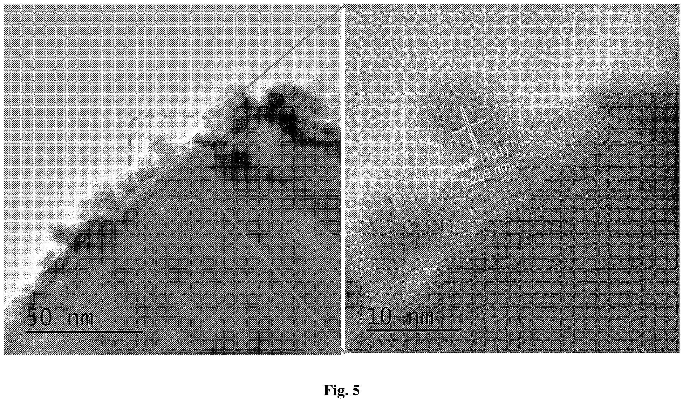

For the synthesis of MoP(10 wt%)/ZSM-5, (NH₄)₆Mo₇O₂₄.4H₂O (0.05495 g, 0.044 mmol), ((NH₄)₂HPO₄) (0.0412 g, 0.31 mmol), citric acid (0.11975 g, 0.62 mmol) were dissolved in deionized water. The mixture was stirred for 1 h and then dropwise added to calcined ZSM-5 (0.25 g). The obtained glue-like sample was dried in an oven at 397 K for overnight and calcined at 773 K in flow air at a flow rate of 20 cm³/min) or muffle furnace for 5 h at rising rate of 5 K/min. The calcined sample was then reduced in H₂, at a flow rate of 20 cm³/min and a heating rate of 2 K/min to 923 K, with the target temperature held for 3 h. The sample was subsequently cooled down to room temperature and protected with N₂ for 1 h prior to removal from the tube reactor for catalytic reaction. Figure 3 displays the X-ray diffraction (XRD) patterns of synthesized MoP supported on ZSM-5 with two different loading amount. With regarding the lower loading amount of 15 wt%, the XRD peaks could be indexed to the structure of ZSM-5. Applying high loading amount, the peaks corresponding to the hexagonal structure of MoP appeared obviously, demonstrating the formation of more and larger MoP nanoparticles. Figure 4 and 5 show the TEM and high resolution transmission electron microscopy (HRTEM) images, respectively, of MoP (10 wt%)/ZSM-5. It can be seen that mono-dispersed MoP nanoparticles with size around 5 nm were synthesized.

### 2. Synthesis of supported noble metal-MoP

### 2.1 Synthesis of Pt-MoP/SiO₂

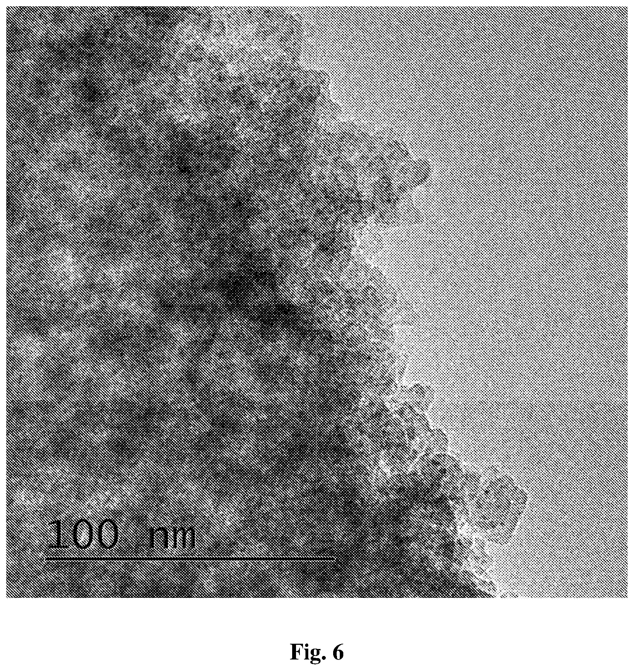

For the synthesis of Pt(0.9 wt%)-MoP(10 wt%)/SiO₂, (NH₄)₆Mo₇O₂₄.4H₂O (0.05495 g), ((NH₄)₂HPO₄) (0.0412 g), citric acid (0.11975 g) were dissolved in 0.5 mL H₂PtCl₆ solution (11.242 mg/L). The mixture was stirred for 1 h and then dropwise added to calcined SiO₂ (0.25 g). The obtained glue-like sample was dried in an oven at 397 K for overnight and calcined at 773 K in flow air at a flow rate of 20 cm³/min) or muffle furnace for 5 h at rising rate of 5 K/min. The calcined sample was then reduced in H₂, at a flow rate of 20 cm³/min and a heating rate of 2 K/min to 923 K, with the target temperature held for 3 h. The sample was subsequently cooled down to room temperature and protected with N₂ for 1 h prior to removal from the tube reactor for catalytic reaction. Figure 6 reveals that the synthesized Pt and MoP are both mono-dispersed on SiO₂ with ultra-small in size. It is difficult to distinguish the Pt and MoP.

### 2.2 Synthesis of Pd-MoP/SiO₂

The synthetic method of Pd-MoP/SiO₂ is similar to that of Pt-MoP/SiO₂. Using Pd(0.78wt%)-MoP(10wt%)/SiO₂ as the example, (NH₄)₆Mo₇O₂₄.4H₂O (0.05495 g), ((NH₄)₂HPO₄) (0.0412 g), citric acid (0.11975 g) were dissolved in 0.75 mL PtCl₂ solution (5.0 mg/L). The mixture was stirred for 1 h and then dropwise added to calcined SiO₂ (0.25 g). The obtained glue-like sample was dried in an oven at 397 K for overnight and calcined at 773 K in flow air at a flow rate of 20 cm³/min) or muffle furnace for 5 h at rising rate of 5 K/min. The calcined sample was then reduced in H₂, at a flow rate of 20 cm³/min and a heating rate of 2 K/min to 923 K, with the target temperature held for 3 h. The sample was subsequently cooled down to room temperature and protected with N₂ for 1 h prior to removal from the tube reactor for catalytic reaction.

### 3. Optimization of catalyst in hydrodeoxygenation (HDO) reaction

### 3.1 General procedure for HDO reaction

In a typical catalytic reaction, a proper amount of catalytic substrate, catalyst and decalin were added to a Parr reactor (reactor volume, 50 mL) and sealed. After finishing purging the reactor with H₂, the reaction was carried out with a proper pressure H₂ (room temperature) at high temperature for a certain time at a stirring speed of 900 rpm. After the reaction was completed and cooled down to room temperature, the organic mixture of the product was collected and analyzed by GC-MS.

### 3.2 Target model compound determination

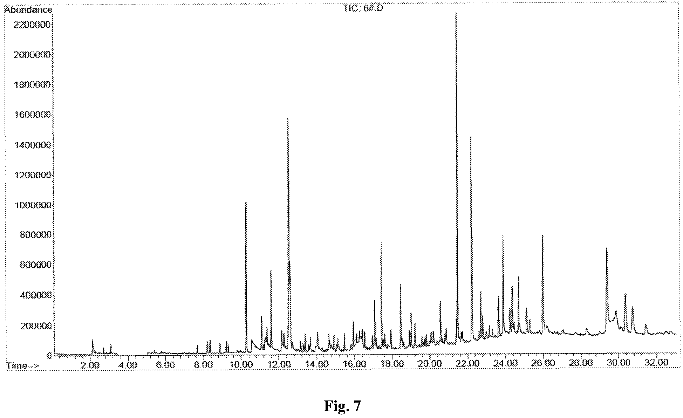

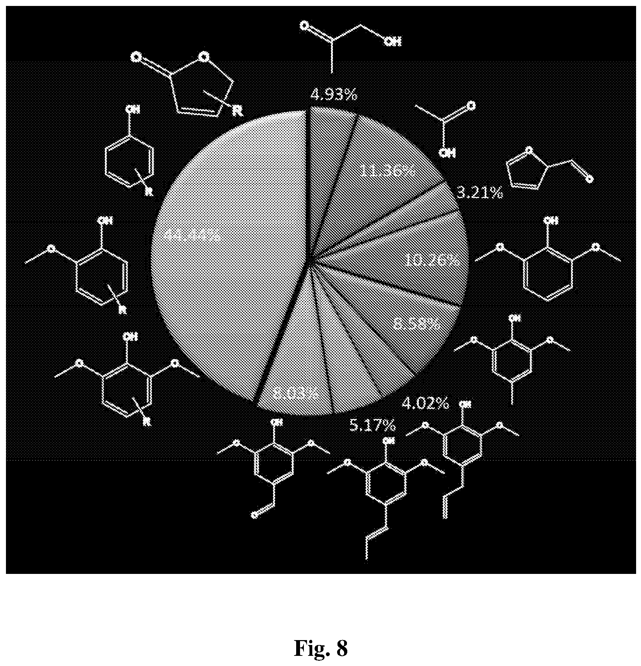

The determination of the components of bio-oil was carried out by using GC-MS. In details, 100 µL of the treacle like bio-oil in organic phase was extracted and dissolved in 1 mL methanol. The formed clear brown solution was analyzed by using GC-MS. The GC-MS pattern is given in figure 7, and corresponding component distribution is summarized in figure 8. It can be seen that 2,6-dimethoxyphenol dominates the components in phenolic derivative. In addition, it contains two types of oxygenated function groups, i.e. methoxyl and hydroxyl, which are also representative in other components in the bio-oil. Accordingly, 2,6-dimethoxyphenol was chosen as the model compound for the HDO study.

### 3.3 Example procedure for HDO reaction

Using the HDO of 2,6-dimethoxyphenol as the example, we loaded 2,6-dimethoxyphenol (154.16 mg, 1 mmol) into a stainless steel Parr autoclave (reactor volume, 50 mL) with decalin (10 mL) and Pt-MoP/SiO₂ (0.9 wt % Pt, 10 wt % MoP, 63.96 mg). Thus the molar ratio between substrate and Mo would be 10:1. After the autoclave was sealed, it was purged with H₂ for three times and then placed under 30 MPa H₂ at room temperature. The reaction was carried out at 573 K for 12 h with a stirring speed of 900 rpm. After reaction, the organic product was collected and analyzed by GC-MS.

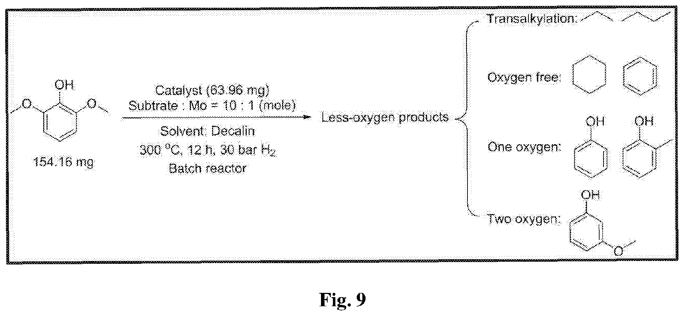

As shown in figure 9, the reaction conditions and possible deoxygenated products are given. For clarity, the straight-chain C3-C6 alkanes are named as transakylation products due to their origin, and the cyclohexane, benzene, and their derivatives without oxygen are named as oxygen free products. An optimum catalyst should produce more oxygen free product while inhibit coke formation due to transalkylation.

### 3.4 Effect of loading amount

The effect of loading amount of the MoP was investigated by using SiO₂ and ZSM-5, respectively, as the support. According to the GC-MS results, the HDO products could be classified into four categories, i.e. transalkylation products like propane, oxygen free products like cyclohexane, one oxygen products like phenol and two oxygen products like guaiacol. For easily comparing the catalyst activity, herein we integrated the selectivity of these four categories. As shown in table 1, For SiO₂ supported catalyst, higher loading amount led to higher selectivity towards oxygen free products. In the case of ZSM-5, further increasing the loading amount dramatically decreased the activity, producing 56.4 wt% two oxygen products. Accordingly, a modest loading amount of MoP is necessary for the HDO catalyst.

**Table 1. HDO activity of compared catalysts with different loading amount.**

| **Catalyst** | **MoP(2.7 %)/SiO₂** | **MoP(15 %)/SiO₂** | **MoP(15 %)/ZSM-5** | **MoP(47.5 %)/ZSM-5** |
|---|---|---|---|---|
| **Entry** | 11 | 6 | 8 | 12 |
| **Transalkylation** (%) | 3.5 | 3.3 | 5.4 | 10 |
| **Oxygen free** (%) | 9 | 11.4 | 27.2 | 10.4 |
| **One oxygen** (%) | 28.8 | 25.8 | 36.5 | 23.2 |
| **Two oxygen** (%) | 58.7 | 59.1 | 30.9 | 56.4 |

| | | | | |
|---|---|---|---|---|
| The selectivity was determined by GC-MS. | | | | |

### 3.5 Effect of support

Two typical supports with difference in terms of acidic character were chosen in the study. ZSM-5 is recognized of much stronger Brønsted acid than SiO₂. As shown in table 1, ZSM-5 exhibited higher activity towards less-oxygen products compared with SiO₂ supported ones. However, more transalkylation products were obtained due to the strong acidity of ZSM-5, which probably give rise to coke formation and deactivate the catalyst in a long term reaction.

### 3.6 Effect of noble metal

According to the catalytic mechanism of HDO which basically could be recognized as cascade reactions including hydrogenation and deoxygenation, noble metals which are capable of high hydrogenation ability was incorporated in the MoP catalyst to expect a higher HDO activity. Table 2 shows the effect of Pt incorporation in the HDO activity. Obviously, a slight amount of 0.9 wt% Pt incorporation led to a significant improvement of the HDO activity, producing oxygen free product (mainly cyclohexane) with high selectivity. This demonstrates our strategy of introducing two catalytically active site in one catalyst is working well for this catalyst. Furthermore, comparisons were carried out to investigate the activity of catalyst with lower loading amount of MoP or Pt. As entry 22 shown, lower the loading amount of MoP from 10 wt% to 2.7 wt% resulted in the decrease of activity. With regarding lower Pt loading amount, decreasing from 0.9 wt% to 0.09 wt% even to 0.01 wt% also led to activity reduction. As a result, a proper loading amount of Pt and MoP and an appropriate ratio between Pt and MoP are both important for the catalyst design. In addition, it can be seen that employing ZSM-5 as the support in the presence of Pt resulted in stronger affinity towards transalkylation products compared with the catalyst without Pt, indicating negative possibility for deactivation.

**Table 2. HDO activity of compared catalysts with Pt incorporation.**

| **Catalyst** | **MoP(15 %) /SiO₂** | **MoP(15 %)/ ZSM-5** | **Pt(0.9 %)-MoP(10 %) /SiO₂** | **Pt(0.9 %)-MoP(2.7 %)/ ZSM-5** | **Pt(0.09 %)-MoP(2.7 %)/ ZSM-5** | **Pt(0.01 %)-MoP(2.7 %)/ ZSM-5** |
|---|---|---|---|---|---|---|
| **Entry** | 6 | 8 | 10 | 22 | 24 | 26 |
| **Transalkyl ation (%)** | 3.3 | 5.4 | 4.4 | 13.7 | 7.1 | **14.1** |
| **Oxygen free (%)** | 11.4 | 27.2 | 84.6 | 35.8 | 9 | 6 |
| **One oxygen (%)** | 25.8 | 36.5 | 11 | 38.7 | 23.5 | 23.7 |
| **Two oxygen (%)** | 59.1 | 30.9 | 0 | 11.8 | 17 | 23.3 |

| | | | | | | |
|---|---|---|---|---|---|---|
| The selectivity was determined by GC-MS. | | | | | | |

The use of Pd as the incorporated noble metal was also investigated. The synthesis is similar with that of Pt incorporation. Table 3 shows the comparison of Pd incorporated catalysts as well as typical MoP and Pt incorporated catalysts. Results from entry 49 suggested that Pd incorporated MoP supported on SiO₂ achieved an excellent activity and selectivity towards oxygen-free products without obvious transalkylation, leading to a higher performance compared with Pt incorporated alternatives. For its lower price compared with Pt, Pd and MoP combination represents as a more promising catalyst. More optimizations based on Pd would be carried out. Similar with the case of Pt incorporation, the presence of ZSM-5 resulted in more transalkylation products.

**Table 3. HDO activity of compared catalysts with Pd incorporation.**

| **Catalyst** | **MoP(15 %)/Si O₂** | **MoP(15 %)/ZS M-5** | **Pt(0.9 %)-MoP(10 %)/Si O₂** | **Pd(0.78 %)-MoP(10 %)/Si O₂** | **Pd(0.78 %)-MoP(10 %)/ZS M-5** |
|---|---|---|---|---|---|
| **Entry** | 6 | 8 | 10 | 49 | 21 |
| **Transalkylati on (%)** | 3.3 | 5.4 | 4.4 | 4.3 | 21 |
| **Oxygen free (%)** | 11.4 | 27.2 | 84.6 | 95.7 | 65 |
| **One oxygen (%)** | 25.8 | 36.5 | 11 | N.D. | 10 |
| **Two oxygen (%)** | 59.1 | 30.9 | N.D. | N.D. | 4 |

| | | | | | |
|---|---|---|---|---|---|
| The selectivity was determined by GC-MS. | | | | | |

### 3.7 Effect of calcination method

Table 4 displayed the catalytic results with two different calcining methods, i.e. calcining in flow air or in muffle furnace. In order to demonstrate the generality of the effect, two distinct catalysts with different noble metals as well as different loading amount were synthesized and tested. The results showed for both catalysts, the calcination methods exerted little effect on the activity and selectivity in HDO reaction, indicating the flexibility of the synthetic method.

**Table 4. HDO activity of compared catalysts under different calcination conditions.**

| **Catalyst** | **Pd(0.78 %)-MoP(10 %)/ZSM-5** | **Pd(0.78 %)-MoP(10 %)/ZSM-5** | **Pt(0.09 %)-MoP(2.7 %)/ZSM-5** | **Pt(0.09 %)-MoP(2.7 %)/ZSM-5** |
|---|---|---|---|---|
| **Entry** | 20 | 21 | 22 | 23 |
| **Calcination** | Flow air | Muffle furnace | Flow air | Muffle furnace |
| **Transalkylation (%)** | 18 | 21 | 13.7 | 16 |
| **Oxygen free (%)** | 73 | 65 | 35.8 | 34.8 |
| **One oxygen (%)** | 4.9 | 10 | 38.7 | 37.1 |
| **Two oxygen** (%) | 3.9 | 4 | 11.8 | 12.1 |

| | | | | |
|---|---|---|---|---|
| The selectivity was determined by GC-MS. | | | | |

### 3.8 Effect of catalyst pretreatment

It is known that the catalyst surface with high activity tends to oxidize when exposing to air and thus lead to the activity reduction. In this section, the expose-to-air MoP catalsyts were compared with corresponding catalysts which were reduced in H₂ under high temprature before the catalytic reactions. The investigation of oxidization effect on noble metal was also carried out. As shown in entry 2 and 6 in table 5, reducing in H₂ before the reactions exerted an improvement of the activity for the MoP catalyst. With respect to Pd incorporated catalyst, pretreatment in H₂ led to a great enhancement of the catalytic activity. Accordingly, MoP based catalysts, especially noble metal incorporated MoP catalysts require a facile pretreatment before the catalytic reactions for the accomplishment of high activity. In the next stage for the fixed-bed reaction, 0.5 % (v/v) O₂/N₂ gas would be equipped in the synthetic procedure to passivate the catalyst in order to fabricate a thin layer of oxide to protect the active surface. When doing the catalytic reaction, the reactor would be purged with H₂ to activate the catalyst before adding reaction substrates.

**Table 5. HDO activity of compared catalysts with Pd incorporation.**

| **Catalyst** | **MoP(15 %)/SiO₂** | **MoP(15 %)/SiO₂** | **Pd(0.78 %)-MoP(10 %)/ZSM-5** | **Pd(0.78 %)-MoP(10 %)/ZSM-5** |
|---|---|---|---|---|
| **Entry** | 2 | 6 | 19 | 20 |
| **Treatment** | Expose-to-air (>1 month) | Reduce in H₂ | Expose-to-air (10 days) | Reduce in H₂ |
| **Transalkylation (%)** | 1.9 | 5.4 | 12 | 18 |
| **Oxygen free (%)** | 15.2 | 27.2 | 45 | 73 |
| **One oxygen (%)** | 21.3 | 36.5 | 18 | 4.9 |
| **Two oxygen (%)** | 61.6 | 30.9 | 25 | 3.9 |

| | | | | |
|---|---|---|---|---|
| The selectivity was determined by GC-MS. | | | | |

### 3.9 Highlight of Pt (or Pd)-MoP/SiO₂

According to the catalytic mechanism of HDO which basically could be recognized as cascade reactions including hydrogenation and deoxygenation, we achieved both functions in one catalyst integrity, in which Pt (or Pd) is responsible for hydrogenation and MoP for deoxygenation. In addition, there is a synergy between these two catalytic components, leading to the deoxygenation activity higher than MoP.

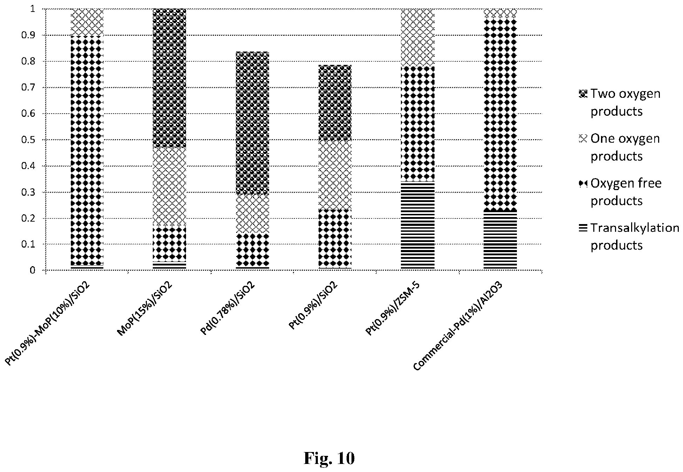

As shown in table 6 and figure 10, with regarding noble metal/SiO₂ (entry 43, 44), they were capable of high hydrogenation ability but very weak deoxygenation. In comparison, the Pt-MoP/SiO₂ (entry 47) displayed significantly higher deoxygenation ability. Besides, compared with MoP/SiO₂ (entry 6), the Pt-MoP/SiO₂ showed much higher HDO activity in decreasing the oxygen content due to the deoxygenation ability of the MoP and the synergic effect between the Pt and the MoP. In addition, acidic sites on catalyst facilitate HDO reactions, but too strong acidic sites resulted in transalkylation reaction giving rise to coke formation and thus deactivation of the catalyst. Compared with commercial Al₂O₃ catalyst (entry 40) or other acidic oxides such as zeolite supported catalysts (entry 21), the acidic sites of Pt-MoP/SiO₂ are provided by MoP, which are more modest in strength and controllable in number by easily changing the loading amount. Thus the transalkylation reaction could be greatly inhibited and the stability could be maintained.

**Table 6. HDO results highlighting the superior activity of metal-metal phosphide/SiO₂**

| **Catalyst** | **Pt(0.92 %)-MoP(10 %)/ SiO₂** | **MoP(15 %) /SiO₂** | **Pd(0.78 %) /SiO₂** | **Pt(0.92 % /SiO₂** | **Pd(0.78 %)-MoP(10 %)/ SiO₂** | **Pd(0.78 %)-MoP(10 %)/ZSM-5** | **Commercial-Pd(1 %)/Al₂O₃** |
|---|---|---|---|---|---|---|---|
| **Entry** | 47 | 6 | 44 | 43 | **49** | 21 | 40 |
| **Transalkyl ation (%)** | 2.1 | 3.3 | 1.7 | 0.10 | **4.3** | 20.7 | 23.1 |
| **Oxygen free (%)** | 87.5 | 14.1 | 12.6 | 22.5 | **95.7** | 65.1 | 73.8 |
| **One oxygen (%)** | 10.4 | 29.5 | 14.8 | 26.3 | **ND** | 10.1 | 3.1 |
| **Two oxygen (%)** | N.D. | 53.2 | 54.6 | 28.7 | **ND** | 4.1 | N.D. |

| | | | | | | | |
|---|---|---|---|---|---|---|---|
| The selectivity was determined by GC-MS | | | | | | | |

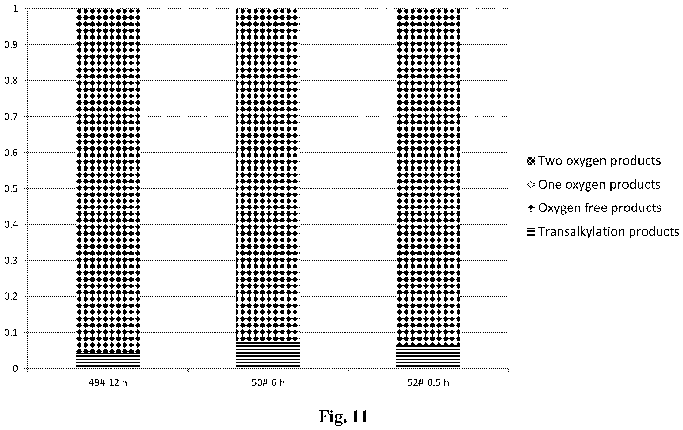

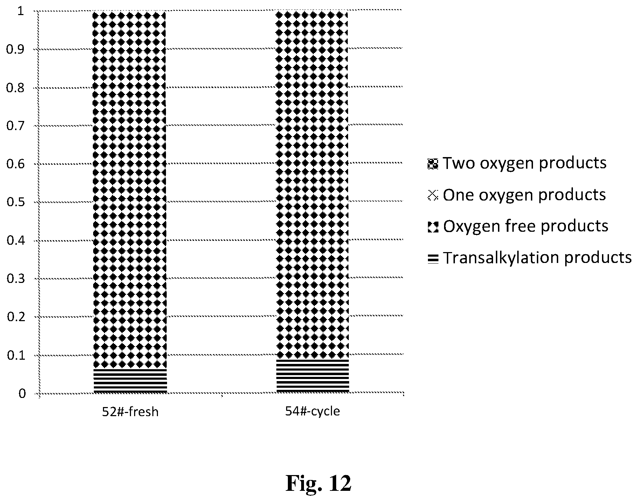

Due to demand for fix-bed reaction, the speed of oxygen removal should occur as quick as possible. Thus reducing the reaction time based on batch reaction was carried out: 49#: 12 h, 50#; 6 h and 52#: 0.5 h. The results showed that even at 0.5 h, the reaction proceeded very quickly, demonstrating the high activity of Pd-MoP/SiO₂, Figure 11. The preliminary result showed the stability of the Pd-MoP/SiO₂ is achievable, Figure 12.

### 4. HDO of bio-oil

### 4.1 Concentration determination of bio-oil

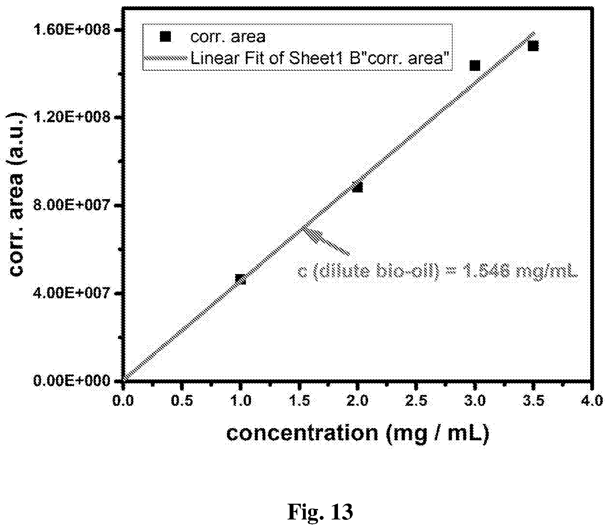

In the above section of 3.2, the component distribution of bio-oil has been determined. In order to determine the adding amount of catalyst as well as to compare the catalytic results with model compounds, the concentration of the bio-oil has been roughly estimated. Four standard solutions of 2,6-dimethoxyphenol were prepared with concentration of 1, 2, 3, 3.5 mg/mL, respectively, and then anlyzed by using GC-MS. As shown in figure 13, the relation between the corresponding area and concentration fits well with linear fitting. Based on this standard curve, the concentration of 2,6-dimethoxyphenol in bio-oil was estimated by analyzing a portion of methanol dissolved bio-oil using GC-MS, recording the corresponding area of 2,6-dimethoxyphenol and searching the same area on the curve. Considering that the analyzed bio-oil has been diluted by 10-fold, the concentration of 2,6-dimethoxyphenol in bio-oil was estimated to be 15.46 mg/mL.

### 4.2 Catalytic performance of Pt-MoP/SiO₂

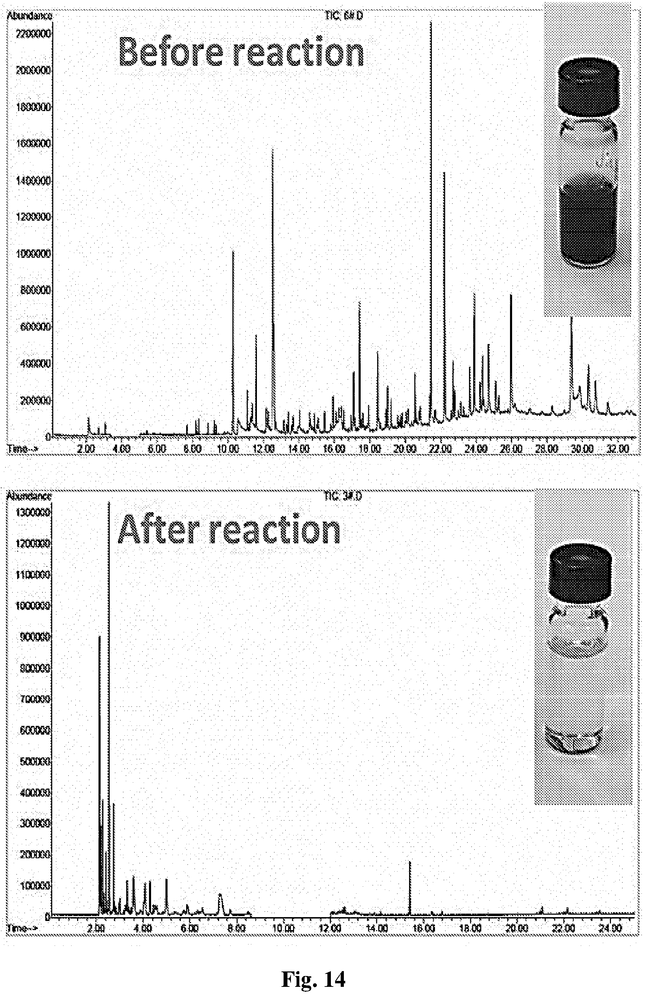

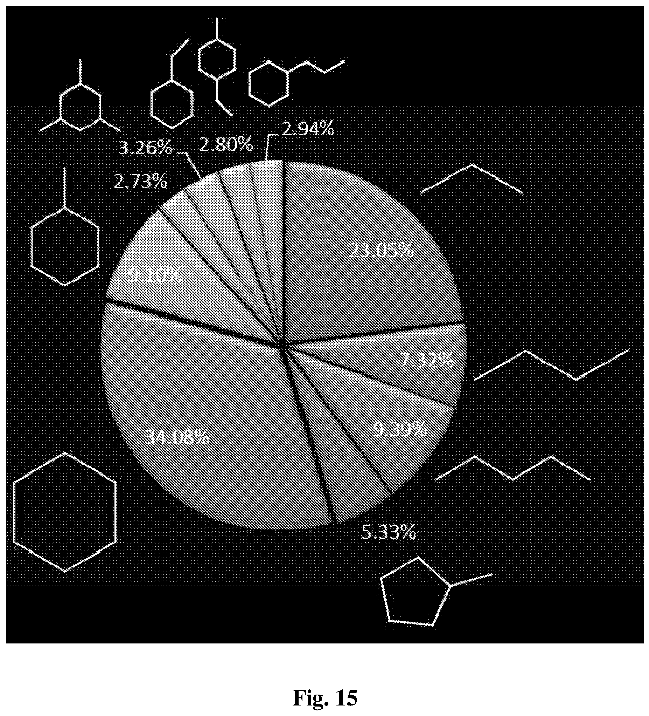

For the HDO of bio-oil, bio-oil (100 µL) was loaded into a stainless steel Parr autoclave (reactor volume, 50 mL) with decalin (10 mL) and Pt-MoP/SiO₂ (0.9 wt% Pt, 10 wt% MoP, 63.96 mg). After the autoclave was sealed, it was purged with H₂ for three times and then placed under 30 MPa H₂ at room temperature. The reaction was carried out at 573 K for 12 h with a stirring speed of 900 rpm. After reaction, the organic phase was collected and analyzed by GC-MS. Figure 14 displays the comparison of GC-MS patterns of the bio-oil and the catalytic products, revealing the total removal of oxygenated compounds locating at high residence time. The GC-MS identification of the corresponding peaks of catalytic products are displayed in figure 15. All the oxygen content in the bio-oil compounds had been removed, producing a large amount of cyclohexane and its derivatives (oxygen-free products) as well as straight-chain alkanes (transalkylation product).

### 4. Conclusion

In this Example a series of MoP-based HDO catalysts was investigated for HDO. Pt (or Pd)-MoP/SiO₂ catalysts have been successfully synthesized and demonstrated to reveal enhanced performance in HDO model reaction in terms of activity and selectivity.

The components of bio-oil were determined by GC-MS. In the preliminary catalytic test of bio-oil HDO conversion, Pt (or Pd)-MoP/SiO₂ catalysts exhibited high activity in reducing the oxygen content.

## Claims

1. A composition, which comprises:
(a) a first metal, which is a transition metal suitable for catalysing the hydrogenation of organic compounds, wherein:
the composition comprises nanoparticles of the first metal and the first metal is platinum or palladium, and
the nanoparticles have a particle size of from 0.5 nm to 500 nm, and
the first metal is in the oxidation state 0, and
the first metal is present in an amount of from 0.01 % by weight to 3.0 % by weight, based on the total weight of the composition;
(b) a phosphide of one or more transition metals, wherein:
the phosphide of one or more transition metals is molybdenum phosphide, and
the phosphide of one or more transition metals is present in an amount of at least 5.0 % by weight based on the total weight of the composition; and
(c) a solid catalyst support, wherein the solid catalyst support comprises SiO₂.

2. The composition according to claim 1, which comprises nanoparticles of the first metal, nanoparticles of the phosphide of one or more transition metals, and said solid catalyst support, wherein the nanoparticles have a particle size of from 0.5 nm to 500 nm.

3. The composition according to claim 1 or 2, wherein:
the first metal is present in an amount of at least 0.5 % by weight based on the total weight of the composition.

4. The composition according to claim 1, 2 or 3, wherein the phosphide of one or more transition metals is present in an amount of from 5.0 % by weight to 12 % by weight, based on the total weight of the composition.

5. Use of the composition as defined in any one of claims 1 to 4 as a hydrodeoxygenation catalyst.

6. The use according to claim 5 of said composition as a catalyst for the hydrodeoxygenation of plant-derived oil, which plant-derived oil is oil obtainable by the pyrolysis of plant-derived biomass which comprises cellulose, lignocellulose and lignin.

7. The use according to claim 6, wherein the plant-derived biomass comprises pulp, wood or other plant waste.

8. The use according to claim 6 or 7, wherein the plant-derived biomass comprises biomass from the eucalyptus plant.

## Patentansprüche

1. Zusammensetzung, die Folgendes umfasst:
(a) ein erstes Metall, bei dem es sich um ein Übergangsmetall handelt, das zum Katalysieren der Hydrierung organischer Verbindungen geeignet ist, wobei:
die Zusammensetzung Nanopartikel des ersten Metalls umfasst und das erste Metall Platin oder Palladium ist und
die Nanopartikel eine Partikelgröße von 0,5 nm bis 500 nm aufweisen und
das erste Metall in der Oxidationsstufe 0 ist und
das erste Metall in einer Menge von 0,01 Gew.-% bis 3,0 Gew.-% auf Grundlage des Gesamtgewichts der Zusammensetzung vorhanden ist;
(b) ein Phosphid von einem oder mehreren Übergangsmetallen, wobei:
das Phosphid von einem oder mehreren Übergangsmetallen Molybdänphosphid ist und
das Phosphid von einem oder mehreren Übergangsmetallen in einer Menge von mindestens 5,0 Gew.-% auf Grundlage des Gesamtgewichts der Zusammensetzung vorhanden ist; und
(c) einen festen Katalysatorträger, wobei der feste Katalysatorträger SiO₂ umfasst.

2. Zusammensetzung nach Anspruch 1, die Nanopartikel des ersten Metalls, Nanopartikel des Phosphids von einem oder mehreren Übergangsmetallen und den festen Katalysatorträger umfasst, wobei die Nanopartikel eine Partikelgröße von 0,5 nm bis 500 nm aufweisen.

3. Zusammensetzung nach Anspruch 1 oder 2, wobei:
das erste Metall in einer Menge von mindestens 0,5 Gew.-% auf Grundlage des Gesamtgewichts der Zusammensetzung vorhanden ist.

4. Zusammensetzung nach Anspruch 1, 2 oder 3, wobei das Phosphid von einem oder mehreren Übergangsmetallen in einer Menge von 5,0 Gew.-% bis 12 Gew.-% auf Grundlage des Gesamtgewichts der Zusammensetzung vorhanden ist.

5. Verwendung der Zusammensetzung wie nach einem der Ansprüche 1 bis 4 definiert als ein Hydrodesoxygenierungskatalysator.

6. Verwendung nach Anspruch 5 der Zusammensetzung als ein Katalysator für die Hydrodesoxygenierung von Öl, das aus Pflanzen gewonnen wurde, wobei es sich bei dem aus Pflanzen gewonnenen Öl um Öl handelt, das durch die Pyrolyse von Biomasse erhaltbar ist, die aus Pflanzen gewonnen wurde und die Cellulose, Lignocellulose und Lignin umfasst.

7. Verwendung nach Anspruch 6, wobei die aus Pflanzen gewonnene Biomasse Zellstoff, Holz oder andere Pflanzenabfälle umfasst.

8. Verwendung nach Anspruch 6 oder 7, wobei die aus Pflanzen gewonnene Biomasse Biomasse aus der Eukalyptuspflanze umfasst.

## Revendications

1. Composition qui comprend :
(a) un premier métal, qui est un métal de transition approprié pour catalyser l'hydrogénation de composés organiques, dans lequel :
la composition comprend des nanoparticules du premier métal et le premier métal est le platine ou le palladium, et
les nanoparticules comportent une taille de particule de 0,5 nm à 500 nm, et
le premier métal est à l'état d'oxydation 0, et
le premier métal est présent en une quantité de 0,01 % en poids à 3 % en poids sur la base du poids total de la composition ;
(b) un phosphure d'un ou de plusieurs métaux de transition, dans lequel :
le phosphure d'un ou de plusieurs métaux de transition est le phosphure de molybdène, et
le phosphure d'un ou de plusieurs métaux de transition est présent en une quantité d'au moins 5 % en poids sur la base du poids total de la composition ; et
(c) un support de catalyseur solide, ledit support de catalyseur solide comprenant le SiO₂.

2. Composition selon la revendication 1, qui comprend des nanoparticules du premier métal, des nanoparticules du phosphure d'un ou de plusieurs métaux de transition, et ledit support de catalyseur solide, dans lequel les nanoparticules comportent une taille de particule de 0,5 nm à 500 nm.

3. Composition selon la revendication 1 ou 2, dans laquelle :
le premier métal est présent en une quantité d'au moins 0,5 % en poids sur la base du poids total de la composition.

4. Composition selon la revendication 1, 2 ou 3, dans laquelle le phosphure d'un ou de plusieurs métaux de transition est présent en une quantité de 5 % en poids à 12 % en poids sur la base du poids total de la composition.

5. Utilisation de la composition telle que définie dans l'une quelconque des revendications 1 à 4 comme catalyseur d'hydrodésoxygénation.

6. Utilisation selon la revendication 5 de ladite composition comme catalyseur pour l'hydrodésoxygénation d'une huile d'origine végétale, ladite huile d'origine végétale étant une huile pouvant être obtenue par la pyrolyse de la biomasse d'origine végétale qui comprend de la cellulose, de la lignocellulose et de la lignine.

7. Utilisation selon la revendication 6, dans laquelle la biomasse d'origine végétale comprend de la pulpe, du bois ou d'autres déchets végétaux.

8. Utilisation selon la revendication 6 ou 7, dans laquelle la biomasse d'origine végétale comprend la biomasse de la plante d'eucalyptus.
